(19) Europäisches Patentamt
European Patent Office
Office européen des brevets

(11) **EP 2 500 147 A2**

(12) **EUROPEAN PATENT APPLICATION**

(43) Date of publication:
**19.09.2012 Bulletin 2012/38**

(51) Int Cl.:
**B25J 9/16** (2006.01)

(21) Application number: **11188781.6**

(22) Date of filing: **11.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.03.2011 JP 2011056570**

(71) Applicant: **Omron Corporation**
**Kyoto-shi, Kyoto 600-8530 (JP)**

(72) Inventors:
• **Hazeyama, Hiroyuki**
  **Kyoto 600-8530 (JP)**
• **Ikeda, Yasuyuki**
  **Kyoto 600-8530 (JP)**
• **Fujikawa, Masahiro**
  **Kyoto 600-8530 (JP)**
• **Nakashita, Naoya**
  **Kyoto 600-8530 (JP)**

(74) Representative: **Horn Kleimann Waitzhofer**
**Elsenheimerstrasse 65**
**80687 München (DE)**

(54) **User support apparatus for an image processing system and image processing system**

(57) The present invention provides, in an image processing system such as a conveyor tracking system as described above, a user support apparatus with which the user can easily set an image capturing start condition for image capturing performed by an image capturing unit, a program for implementing such a function and an image processing apparatus equipped with such a function. The user support apparatus includes a display means for displaying an image obtained by image capturing with the image capturing unit, an input means for receiving a designation of a region of a workpiece to be detected in the image displayed on the display means, and a determining means for determining an image capturing start condition for the image capturing unit that is defined in terms of the amount of movement of a conveying apparatus, based on the size of the region indicating the workpiece to be detected by using a relationship between the image capturing range of the image capturing unit and the physical length of the conveying apparatus.

FIG. 13

EP 2 500 147 A2

**Description**

TECHNICAL FIELD

The present invention relates to a user support apparatus for an image processing system such as a conveyor tracking system, and a program thereof and an image processing apparatus.

RELATED ART

In the field of factory automation (FA), for the purpose of laborsaving, many techniques are used for controlling various types of processes by using image processing. An example application of such image processing technology is a process in which a workpiece conveyed by a conveying apparatus such as a belt conveyor is traced (tracked) and grasped by using a moving machine (hereinafter referred to as an "industrial robot" or simply as a "robot"). Such a process is referred to as conveyor tracking, for example.

With conveyor tracking technology, workpieces on the conveying apparatus are captured by an image capturing apparatus and the image obtained by capturing is subjected to measurement processing, such as pattern matching or binarization processing, performed by the image processing apparatus so as to identify the position (coordinates) of each workpiece. Then, the robot traces and grasps each workpiece based on the identified position (coordinates) of the workpiece.

For example, Patent Document 1 (Japanese Published Patent Application No. 2002-113679) discloses a tracking method in which a plurality of workpieces conveyed by a conveyor are captured and handling of the workpieces is controlled based on the position coordinates of each workpiece recognized as a result of the image capturing. More specifically, the tracking method disclosed in Patent Document 1 uses a configuration in which images are captured continuously such that an image capturing region captured by an image capturing means and an image capturing region captured immediately thereafter overlap in the traveling direction by a certain length that includes the entirety of a workpiece, and the position coordinates only of workpieces whose entirety is included in the image capturing region are recognized.

In other words, with the tracking method of Patent Document 1, image capturing is performed each time the conveyor moves by a certain distance. At this time, in order to assure that all target workpieces are captured and measured, an image capture timing (trigger interval) is set such that the overlapping range between two successive image capturing ranges is larger than or equal to the size of a single workpiece and smaller than half the size of the field of view of the camera.

RELATED ART DOCUMENTS

PATENT DOCUMENTS

[Patent Document 1] Japanese Published Patent Application No. 2002-113679

SUMMARY OF THE INVENTION

PROBLEMS TO BE SOLVED BY THE INVENTION

Generally, it is often the case that the overlapping range between successive image capturing ranges needs to be adjusted for each production line or the like. However, the tracking method of Patent Document 1 contains no disclosure of any method of adjusting image capturing ranges.

For example, in the case of workpieces having nonuniform shapes such as food products, it is difficult to accurately determine the workpiece size (the size of a workpiece), and therefore there is a problem in that it takes time and effort to adjust the overlapping range between image capturing ranges (or in other words, the image capture timing).

Furthermore, depending on the method of measurement processing by the image processing apparatus, a situation can occur in which a minimum value set for the overlapping range becomes greater than the workpiece size. For example, in the case of detecting the position of a workpiece by using matching processing with pre-registered models, the circumscribed rectangle of a region to be registered as a model (the diagonal line of the circumscribed rectangle in the case where the model is rotated) should be set as the minimum value for the overlapping range. Otherwise, situations may occur in which accurate workpiece measurement is not possible.

In view of the above, the present invention has been conceived to solve the problems as described above, and it is an object of the present invention to provide a user support apparatus for an image processing system as described above such as a conveyor tracking system, the user support apparatus allowing the user to easily set an image capturing start condition for an image capturing unit to perform image capturing, as well as a program for implementing such a function and an image processing apparatus equipped with such a function.

MEANS FOR SOLVING THE PROBLEMS

An aspect of the present invention provides a user support apparatus for an image processing system. The image processing system includes an image capturing unit disposed so as to capture a workpiece conveyed on a conveying apparatus and an image processing apparatus connected to the image capturing unit. The user support apparatus includes a display means for displaying an image obtained by image capturing with the image capturing unit, an overlapping range determining means for determining an overlapping range between image capturing ranges in the images displayed on the display means, and an image capturing start condition determining means for determining an image capturing start condition for the image capturing unit that is defined in terms of an amount of movement of the conveying apparatus, the image capturing start condition being determined based on a size of the determined overlapping range, using a relationship between an image capturing range of the image capturing unit and a property of the conveying apparatus.

Preferably, the user support apparatus further includes a changing means for changing the determined image capturing start condition in response to a user operation.

Preferably, the user support apparatus further includes a measurement means for performing measurement processing on the image obtained by image capturing with the image capturing unit. The overlapping range determining means determines the overlapping range from a range detected by the measurement processing.

Alternatively, preferably, the overlapping range determining means determines the overlapping range in response to a designation of a region to be detected in the image displayed on the display means.

Alternatively, preferably, the overlapping range determining means determines the overlapping range so that it can include at least a region indicating a workpiece to be detected.

More preferably, the overlapping range determining means determines the overlapping range such that the overlapping range is longer than a diagonal line of the region indicating a workpiece to be detected.

Alternatively, preferably, the overlapping range determining means includes a means for simultaneously displaying a range corresponding to a workpiece conveyed on the conveying apparatus and a plurality of image capturing ranges captured consecutively and a means for determining the overlapping range in response to a user operation on the displayed plurality of image capturing ranges.

Preferably, the user support apparatus further includes a means for determining an allowable conveying speed of the conveying apparatus, based on a relationship between the image capturing start condition and a measurement processing time in the image processing apparatus.

Preferably, the user support apparatus further includes a means for determining an allowable conveying speed of the conveying apparatus from a relationship between the image capturing start condition and a measurement processing time in the image processing apparatus.

Another aspect of the present invention provides a program that can be executed by a computer and thereby cause the computer to function as a user support apparatus for an image processing system. The image processing system includes an image capturing unit disposed so as to capture a workpiece conveyed on a conveying apparatus and an image processing apparatus connected to the image capturing unit. The program causes the computer to function as: a display means for displaying an image obtained by image capturing with the image capturing unit; an overlapping range determining means for determining an overlapping range between image capturing ranges in the images displayed on the display means; and an image capturing start condition determining means for determining an image capturing start condition for the image capturing unit that is defined in terms of an amount of movement of the conveying apparatus, the image capturing start condition being determined based on a size of the determined overlapping range, using a relationship between an image capturing range of the image capturing unit and a property of the conveying apparatus.

Still another aspect of the present invention provides an image processing apparatus that can be connected to an image capturing unit that is disposed so as to capture a workpiece conveyed on a conveying apparatus. The image processing apparatus includes: a display means for displaying an image obtained by image capturing with the image capturing unit; an overlapping range determining means for determining an overlapping range between image capturing ranges in the image displayed on the display means; and an image capturing start condition determining means for determining an image capturing start condition for the image capturing unit that is defined in terms of an amount of movement of the conveying apparatus, the image capturing start condition being determined based on a size of the determined overlapping range, using a relationship between an image capturing range of the image capturing unit and a property of the conveying apparatus.

EFFECTS OF THE INVENTION

With the present invention, in an image processing system such as a conveyor tracking system, the user can easily set an image capturing start condition for an image capturing unit to perform image capturing.

BRIEF DESCRIPTION OF THE DRAWINGS

Fig. 1       is a schematic diagram showing the configuration of a conveyor tracking system that uses a vision sensor according to an embodiment of the present invention.

Fig. 2       is a diagram illustrating positioning and tracking processing performed in the conveyor tracking system that uses the vision sensor according to an embodiment of the present invention.

Fig. 3       is a schematic diagram showing the hardware configuration of the conveyor tracking system that uses the vision sensor according to an embodiment of the present invention.

Fig. 4       shows diagrams illustrating the image capturing range of the vision sensor according to an embodiment of the present invention.

Fig. 5       is a schematic diagram showing the hardware configuration of a support apparatus connectable to the vision sensor according to an embodiment of the present invention.

Fig. 6       is a diagram illustrating calibration according to an embodiment of the present invention.

Fig. 7       is a diagram showing an example of a parameter set obtained by the calibration shown in Fig. 6.

Fig. 8       is a diagram illustrating a procedure of calibration according to an embodiment of the present invention.

Fig. 9       is a diagram illustrating the procedure of calibration according to an embodiment of the present invention.

Fig. 10      is a diagram illustrating the procedure of calibration according to an embodiment of the present invention.

Fig. 11      shows diagrams showing examples of a user interface according to Embodiment 1 of the present invention.

Fig. 12      shows diagrams showing examples of a user interface according to Embodiment 1 of the present invention.

Fig. 13      is a flowchart illustrating a procedure of processing for setting an image capturing start condition according to Embodiment 1 of the present invention.

Fig. 14      is a diagram showing an example of a user interface according to Embodiment 2 of the present invention.

Fig. 15      is a flowchart illustrating a procedure of processing for setting an image capturing start condition according to Embodiment 2 of the present invention.

Fig. 16      shows diagrams showing other examples of a user interface according to Embodiment 2 of the present invention.

Fig. 17      shows diagrams showing examples of a user interface according to Embodiment 3 of the present invention.

Fig. 18      shows diagrams illustrating the arrangements of a workpiece corresponding to Fig. 17.

Fig. 19      is a flowchart illustrating a procedure of determining an upper limit value of the conveying speed in the conveyor tracking system that uses the vision sensor according to an embodiment of the present invention.

Fig. 20      is a sequence diagram illustrating a control operation in the conveyor tracking system that uses the vision sensor according to an embodiment of the present invention.

Fig. 21    shows flowcharts illustrating processing in a robot control apparatus according to an embodiment of the present invention.

EMBODIMENTS OF THE INVENTION

Embodiments of the present invention will be described in detail with reference to the drawings. In the drawings, parts that are the same or correspond to each other have been given the same reference signs, and redundant descriptions thereof will not be given.

<A. System Configuration>

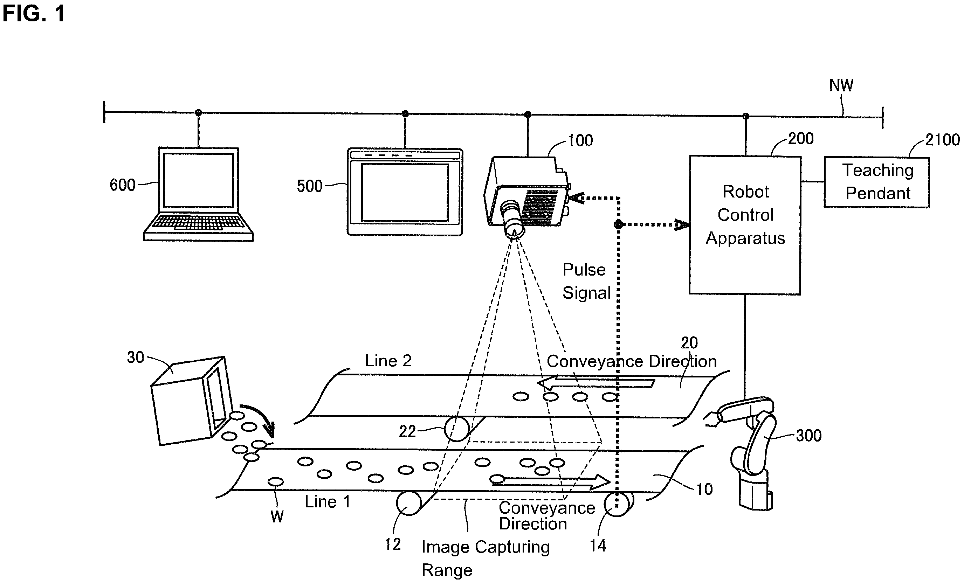

Fig. 1 is a schematic diagram showing the configuration of a conveyor tracking system that uses a vision sensor 100 according to an embodiment of the present invention. The conveyor tracking system shown in Fig. 1 includes two conveying apparatuses (conveyors) 10 and 20. The conveyors 10 and 20 are rotationally driven by driving rollers 12 and 22, respectively. Hereinafter, the conveyors 10 and 20 are also referred to as line 1 and line 2, respectively. In the example shown in Fig. 1, the line 1 moves toward the right side of the paper plane and the line 2 moves toward the left side of the paper plane. Workpieces W are randomly provided to the line 1 by a dispenser 30 or the like from the left side of the paper plane. The workpieces W on the line 1 move from the left side to the right side of the paper plane. The workpieces W can typically be food products such as confectionary, various types of tablets, or the like.

The vision sensor 100 according to the present embodiment is provided at a predetermined position above the line 1. As will be described later, the vision sensor 100 integrally includes an image capturing unit for capturing objects such as workpieces and an image processing unit for processing images captured by the image capturing unit. However, the image capturing unit and the image processing unit may be provided as separate units.

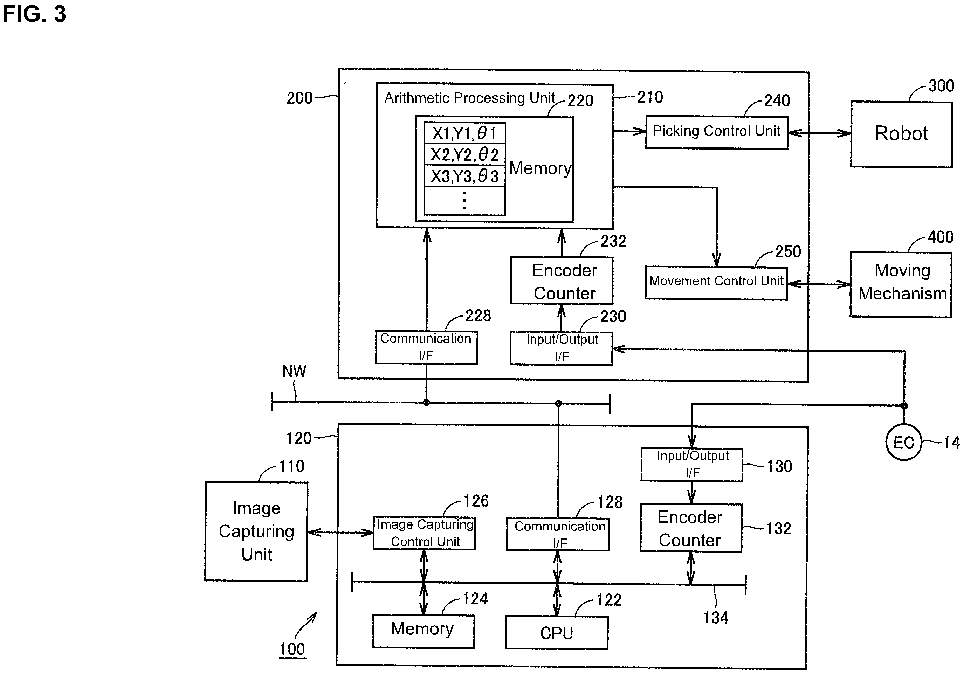

The vision sensor 100 is set such that its image capturing range covers the entire width direction of the line 1 (the direction perpendicular to the conveyance direction). The vision sensor 100 sequentially captures workpieces W that are randomly delivered on the line 1 by performing image capturing in accordance with a predetermined image capturing start condition. The vision sensor 100 performs measurement processing, such as pattern matching or binarization processing, on the sequentially captured images so as to perform positioning and tracking processing of each workpiece. The image capturing unit (image capturing unit 110 shown in Fig. 3) of the vision sensor 100 is disposed such that it can capture workpieces W conveyed on the conveyor 10 serving as a conveying apparatus. The image capturing unit is connected to the image processing apparatus (image processing unit 120 shown in Fig. 3).

In the conveyance direction of the line 1, a robot 300 for grasping and moving a workpiece W to the line 2 is disposed on the downstream side of the vision sensor 100. The robot 300 has a hand tip for grasping a workpiece W, and grasps a workpiece on the line 1 by moving the hand tip to the target position. In other words, the robot 300 corresponds to a moving machine that handles workpieces W and that is disposed downstream from the image capturing range of the image capturing unit of the vision sensor 100 in the conveyance path of the conveyor 10 (line 1) serving as a conveying apparatus. More specifically, the robot 300 positions its hand tip to a target workpiece W, and picks up and neatly places the workpiece W on the line 2.

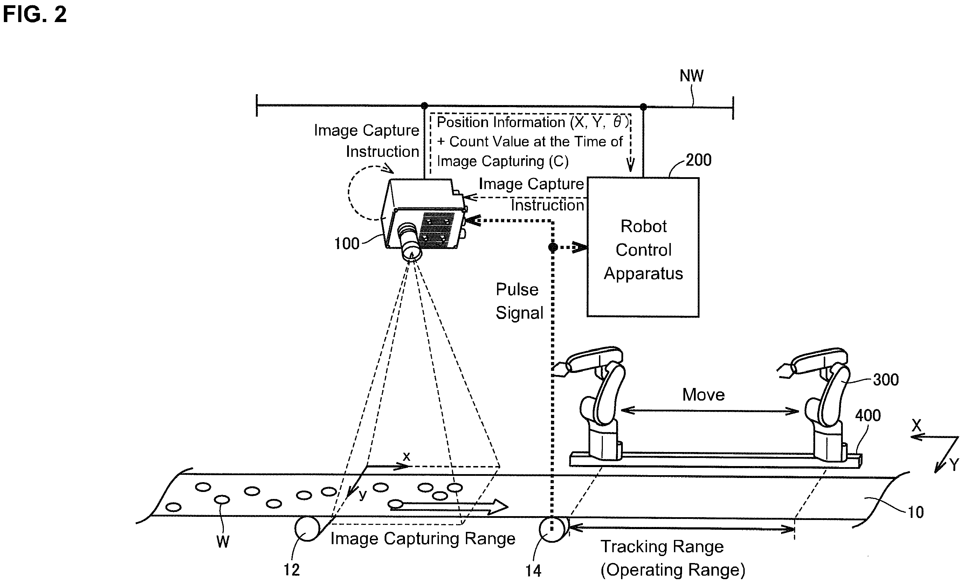

Furthermore, the robot 300 is disposed on a moving mechanism 400 (see Fig. 2) for moving the robot 300 along the line 1 so that it moves over a predetermined operating range. The operating range of the robot 300 will also be referred to as a "tracking range".

The tracking processing and positioning processing of the robot 300 are controlled using the results of detection performed by an encoder 14 provided in the line 1. The encoder 14 can typically be a rotary encoder, and generates a pulse signal by rotation. By counting the number of pulses of the generated pulse signal, the number of rotations of a roller connected to the conveyor 10 (line 1) is obtained. In other words, the pulse signal generated by the encoder 14 corresponds to a signal that indicates the amount of movement of the conveyor 10 serving as a conveying apparatus in the conveyance path, and the amount of movement of the conveyor 10 is calculated based on the pulse signal.

The robot 300 operates in accordance with instructions from a robot control apparatus 200. In other words, the robot control apparatus 200 is a control apparatus for controlling the robot 300 serving as a moving machine. The robot control apparatus 200 is connected to the vision sensor 100 via a network NW, and provides an instruction necessary for the operation of grasping each workpiece W to the robot 300 based on the position of the workpiece W detected by the vision sensor 100.

The robot control apparatus 200 is connected to a teaching pendant 2100 for performing calibration of the robot 300 or the like. The user operates the teaching pendant 2100 so as to move the robot 300 to the position required to perform calibration or the like.

An operation display apparatus 500 and a support apparatus 600 may be connected to the network NW, in addition to the vision sensor 100 and the robot control apparatus 200. The operation display apparatus 500 displays results of processing from the vision sensor 100 and the operating state of the robot 300 from the robot control apparatus 200, as well as providing various types of instructions to the vision sensor 100 and/or the robot control apparatus 200 in response to user operations.

In the conveyor tracking system shown in Fig. 1, a situation can occur in which the same workpiece is captured twice when image capturing is performed by overlapping image capturing ranges. In this case, the same workpiece is detected twice. To address this, a duplication removal function is implemented that, each time the position coordinates of a workpiece is detected, checks whether or not the workpiece is the same as the previously detected workpiece, and the duplicate detection result is removed. The duplication removal function is preferably implemented within the vision sensor 100 and/or the robot control apparatus 200.

<B. Positioning and Tracking Processing>

A detailed description of positioning and tracking processing performed in the conveyor system shown in Fig. 1 will be given next.

Fig. 2 is a diagram illustrating positioning and tracking processing performed in the conveyor tracking system that uses the vision sensor 100 according to an embodiment of the present invention. As shown in Fig. 2, the vision sensor 100 captures the line 1 by using the built-in image capturing unit. The image capturing operation of the vision sensor 100 starts in response to an image capture instruction issued from the vision sensor 100 or an image capture instruction issued from the robot control apparatus 200.

In the conveyor tracking system of the present embodiment, a support logic is implemented for facilitating determination of an image capturing start condition (typically, as will be described later, an image capture cycle defined in terms of the amount of movement of the conveyor) for issuing the image capture instruction.

When the robot control apparatus 200 issues an image capture instruction, the image capture instruction is conveyed via the network NW connecting the vision sensor 100 and the robot control apparatus 200. The network NW can typically be a general-purpose network such as Ethernet®.

The vision sensor 100 starts image capturing in response to the image capture instruction. The vision sensor 100 thereby sequentially obtains images showing the image capturing range. Then, the vision sensor 100 executes measurement processing (typically, pattern matching processing or binarization processing based on a pre-registered model image for workpiece W) on the images. Furthermore, the vision sensor 100 transmits, to the robot control apparatus 200, position information (X, Y, 8) of each workpiece W at the time of image capturing obtained by the measurement processing.

In this manner, the vision sensor 100 performs measurement processing on the images obtained by image capturing with the image capturing unit and thereby obtains position information of a region, in the image, corresponding to the pre-registered workpiece.

The position information transmitted from the vision sensor 100 includes the position (X, Y) of the workpiece W on the conveyor 10 and the rotation angle ($\theta$) of the workpiece W.

From the viewpoint of simplifying the processing of the robot control apparatus 200, values transformed to a coordinate system for controlling the robot 300 are used as the coordinates (X, Y) of the workpiece W. Specifically, the vision sensor 100 transmits the position information of the workpiece W to the robot control apparatus 200 in the form of values defined by the coordinate system of the robot 300.

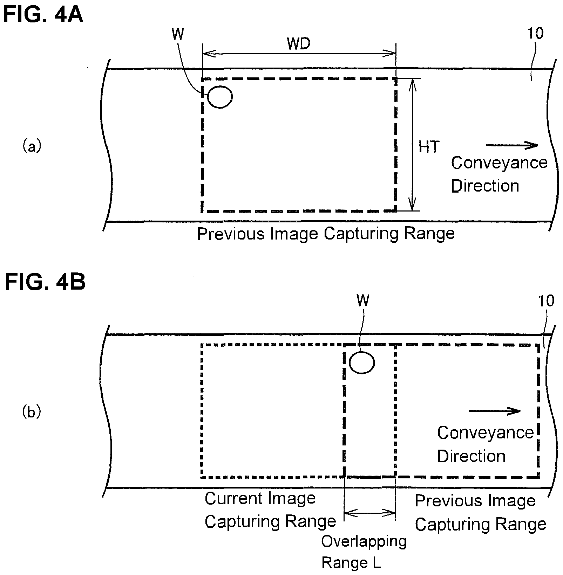

More specifically, as shown in Fig. 4, it is assumed that the vision sensor 100 (image capturing unit 110) is capable of obtaining an image having a width WD and a height HT [pixels] by image capturing. Coordinate values ($x_i$, $y_i$) defined in an xy coordinate system set in the image (hereinafter also referred to as an "image coordinate system") are transformed to coordinates of an XY coordinate system set for the hand tip (picking) position of the robot 300 (hereinafter also referred to as the "robot coordinate system"). The transformation equation and parameters used in the coordinate transformation will be described later.

By performing this coordinate transformation, it is possible to define the hand tip (picking) position of the robot 300 in the X coordinate (the conveyance direction of the conveyor) and the Y coordinate (the direction that is perpendicular to the conveyance direction of the conveyor) and identify the position of each workpiece detected by pattern matching processing using the XY coordinate system (robot coordinate system).

As described above, the position information includes coordinates of a region corresponding to the pre-registered workpiece in the image obtained by image capturing, the coordinates being expressed in a coordinate system of the robot 300 serving as a moving machine ("robot coordinate system"). Also, the vision sensor 100 and the robot control apparatus 200 have been calibrated in advance so that the position information of each workpiece W measured can be output as values in the robot coordinate system. The calibration will be described later.

The rotation angle ($\theta$) of a workpiece W means a rotation angle with respect to the model image of workpiece W. In other words, the position information further includes the rotation angle of a region corresponding to the pre-registered workpiece in the image with respect to the orientation of the pre-registered workpiece. Depending on the shape of the workpiece W, the rotation angle of the hand tip of the robot 300 or the like is properly controlled based on the rotation angle information.

The robot control apparatus 200 counts the number of pulses included in the pulse signal from the encoder 14, and transmits an image capture instruction to the vision sensor 100 via the network NW at the timing when a number of pulses greater than or equal to a preset value is input.

The position information of each workpiece from the vision sensor 100 is transmitted to the robot control apparatus 200 via the network NW and stored in a memory provided inside the robot control apparatus 200. Also, the robot control apparatus 200 updates the coordinates (X, Y) of all workpieces W stored in the memory each time a pulse signal is received from the encoder 14. This is done so as to track workpieces W that are actually conveyed on the belt conveyor in the memory of the robot control apparatus 200. When the updated position information (coordinates) of a workpiece W falls in the tracking range of the robot 300, an instruction necessary for the grasping operation is given to the robot 300.

The pulse signal generated according to the detection result from the encoder 14 provided in the line 1 is configured to be input into the vision sensor 100 and the robot control apparatus 200. The vision sensor 100 and the robot control apparatus 200 each include an encoder counter for counting the number of pulses of the pulse signal. The pulse signal from the encoder 14 is input in parallel into the vision sensor 100 and the robot control apparatus 200, and thus when the respective encoder counters are initialized (counter reset) at the same timing, the encoder counters will indicate the same count value for the subsequently input pulse signal. The count values can be synchronized.

More specifically, the amount of movement of the conveyor per pulse of the pulse signal from the encoder 14 is preset in each of the vision sensor 100 and the robot control apparatus 200. Furthermore, the same parameters (counter maximum value, counter minimum value, incremental value per pulse and so on) have been set in each of the respective encoder counters of the vision sensor 100 and the robot control apparatus 200. In other words, the same count parameters have been set in the encoder counter of the vision sensor 100 and the encoder counter of the robot control apparatus 200.

The count values of the encoder counters are initialized to 0 before the production line is operated. In other words, the encoder counter of the vision sensor 100 is reset together with the encoder counter of the robot control apparatus 200 before counting of the number of pulses of the pulse signal is started.

As described above, in the present embodiment, a means for synchronizing and maintaining the amount of movement of the conveyor 10 in the conveyance path between the vision sensor 100 and the robot control apparatus 200 is implemented.

With the configuration described above, the vision sensor 100 adds the count value obtained when image capturing is actually performed in response to an image capture instruction from the robot control apparatus 200 to the position information of each workpiece and transmits the position information to the robot control apparatus 200. In other words, the vision sensor 100 transmits the position information of a workpiece W and the amount of movement of the conveyor 10 corresponding to the position information to the robot control apparatus 200.

As described above, because the count values are synchronized and maintained between the vision sensor 100 and the robot control apparatus 200, even if there is a time lag between the timing when the robot control apparatus 200 transmits an image capture instruction and the timing when the vision sensor 100 actually performs image capturing in response to the image capture instruction, the timing when image capturing is actually performed can be identified on a common time axis, or in other words, by using the synchronized count values.

Thus, the vision sensor 100 transmits to the robot control apparatus 200 the position information of the detected workpiece W and the amount of movement of the conveyor 10 when the image used to obtain the position information was captured. The amount of movement when the image used to obtain the position information of the workpiece W is indicated by the count value of the counter.

The robot control apparatus 200 corrects, by using the count value at the time of image capturing received from the vision sensor 100, the corresponding position information and stores the corrected position information in the memory included in the robot control apparatus 200. It is thereby possible to avoid a situation in which a time lag between the output of an image capture instruction and the actual image capturing caused by a high line speed affects the positioning and tracking processing of the robot 300.

<C. Hardware Configuration>

Fig. 3 is a schematic diagram showing the hardware configuration of the conveyor tracking system that uses the vision sensor 100 according to an embodiment of the present invention. As shown in Fig. 3, the vision sensor 100 includes an image capturing unit 110 and an image processing unit 120.

The image capturing unit 110 is an apparatus for capturing an object that is present in the image capturing range, and includes, as primary constituent elements, an optical system composed of a lens and an aperture, and a light receiving element such as a CCD (Charge Coupled Device) image sensor or CMOS (Complementary Metal Oxide Semiconductor) image sensor. The image capturing unit 110 performs image capturing in accordance with an instruction from the image processing unit 120 and outputs image data obtained by the image capturing to the image processing unit 120.

The image processing unit 120 includes a CPU (Central Processing Unit) 122, a memory 124, an image capturing control unit 126, a communication interface (I/F) 128, an input/output interface (I/F) 130 and an encoder counter 132. These components are connected so as to be capable of data communication with each other via a bus 134.

The CPU 122 is a processor that performs main arithmetic operations in the image processing unit 120. The memory 124 stores various types of programs executed by the CPU 122, image data captured by the image capturing unit 110, various types of parameters and the like. Typically, the memory 124 includes a volatile storage device such as a DRAM (Dynamic Random Access Memory) and a non-volatile storage device such as a flash memory.

The image capturing control unit 126 controls the image capturing operation of the connected image capturing unit 110 in accordance with an internal command from the CPU 122 and the like. The image capturing control unit 126 includes an interface for transmitting various types of commands to the image capturing unit 110 and an interface for receiving image data from the image capturing unit 110.

The communication interface 128 exchanges various types of data with the robot control apparatus 200. Typically, the vision sensor 100 and the robot control apparatus 200 are connected via Ethernet®, and the communication interface 128 is hardware compliant with Ethernet®.

The input/output interface 130 outputs various types of signals from the image processing unit 120 to the outside or receives input of various types of signals from the outside. Particularly, the input/output interface 130 receives the pulse signal generated by the encoder 14, converts the received signal to a digital signal and outputs the digital signal to the encoder counter 132.

The encoder counter 132 counts the number of pulses of the pulse signal from the encoder 14. The encoder counter 132 basically operates independent of the arithmetic operation cycle of the CPU 122, and therefore does not miscount the number of pulses of the pulse signal from the encoder 14.

The robot control apparatus 200 includes an arithmetic processing unit 210, a communication interface (I/F) 228, an input/output interface (I/F) 230, an encoder counter 232, a picking control unit 240 and a movement control unit 250.

The arithmetic processing unit 210 is a processor that performs arithmetic operations for outputting commands to the robot 300 and the moving mechanism 400 based on the position information from the vision sensor 100, and includes a memory 220 for tracking each workpiece W. The memory 220 stores the position information of each workpiece W detected by measurement processing of the vision sensor 100. The arithmetic processing unit 210 sequentially updates the position information of each workpiece according to the movement of the conveyor of interest (detected based on the pulse signal from the encoder 14).

The communication interface (I/F) 228 exchanges various types of data with the image processing unit 120 of the vision sensor 100. Typically, the vision sensor 100 and the robot control apparatus 200 are connected via Ethernet®, and the communication interface 228 is hardware compliant with Ethernet®.

The input/output interface 230 outputs various types of signals from the robot control apparatus 200 to the outside, or receives input of various types of signals from the outside. Particularly, the input/output interface 230 receives the pulse signal generated by the encoder 14, converts the received signal to a digital signal and outputs the digital signal to the encoder counter 232.

The encoder counter 232 counts the number of pulses of the pulse signal from the encoder 14. The encoder counter 232 basically operates independent of the arithmetic operation cycle of the arithmetic processing unit 210, and therefore does not miscount the number of pulses of the pulse signal from the encoder 14.

The picking control unit 240 controls the grasping operation of the connected robot 300 in accordance with an internal command from the arithmetic processing unit 210 or the like. The picking control unit 240 includes an interface for transmitting a target position of the robot 300 on its movable axis and an interface for receiving the current position of the robot 300 on its movable axis.

The movement control unit 250 controls tracking in the moving mechanism 400 that drives the connected robot 300 in accordance with an internal command from the arithmetic processing unit 210 or the like. The moving mechanism 400 includes an interface for transmitting a target position and a target speed of the moving mechanism 400 and an interface for receiving the current position of the moving mechanism 400 on the movement axis.

<D. Image Capturing Start Condition>

The conveyor tracking system of the present embodiment provides a support function for determining an image capturing start condition for sequentially capturing workpieces conveyed on the conveyor. The image capturing start condition is defined in association with the amount of movement of the conveyor 10 so as to assure that all target workpieces are captured and measured (detected) even when the conveying speed of the conveyor 10 varies. More specifically, image capturing is performed using the image capturing unit 110 each time the conveyor 10 moves forward by a predetermined distance. Accordingly, a typical image capturing start condition can be defined as the amount of movement of the conveyor 10 (the count value of the pulse signal from the encoder 14) that indicates the cycle (period) for generating image capture instructions. In other words, an image capture instruction is issued each time the count value of the encoder counter 132 or 232 is incremented by a predetermined value that has been set as the image capturing start condition. In response to the image capture instruction, capturing of the image capturing range by the image capturing unit 110 and measurement processing on the image obtained by the image capturing are performed. The cycle for generating image capture instructions as described above is also referred to as "trigger interval".

Fig. 4 shows diagrams illustrating the image capturing range of the vision sensor 100 according to an embodiment of the present invention. As shown in Fig. 4(a), first, it is assumed that the vision sensor 100 (image capturing unit 110) is capable of obtaining an image having a width WD and a height HT [pixel] by image capturing and that a workpiece W on the conveyor 10 moves at the conveying speed of the conveyor 10. It is also assumed that an image capture instruction is given after a predetermined period of time from the state shown in Fig. 4(a) and image capturing is performed by the vision sensor 100 (image capturing unit 110), as a result of which an image as shown in Fig. 4(b) is obtained.

With the conveyor tracking system of the present embodiment, in order to assure that all target workpieces W are captured/measured, the image capturing start condition is set such that the overlapping range between image capturing ranges that are captured consecutively, or in other words, the overlapping range between the previous image capturing range and the current image capturing range (see Fig. 4(b)) includes at least a workpiece W (a region to be registered as a model).

Typically, with the conveyor tracking system of the present embodiment, it is preferable to set the image capturing start condition such that the length in the conveyance direction of the overlapping range between image capturing ranges that are captured consecutively is greater than the length of the diagonal line of the workpiece W (the region to be registered as a model). The reason is that, because workpieces W are not always oriented in the same direction, in order to assure that all target workpieces are captured/measured regardless of the rotation angle of the workpieces W, it is preferable to set an overlapping range length L to be greater than at least the length of the diagonal line of the workpiece W.

The workpiece W is included in both the previous image capturing range and the current image capturing range shown in Fig. 4(b), and therefore the workpiece W is detected (extracted by pattern matching) in the image obtained by capturing each image capturing range. In this case, no problem arises in conveyor tracking because the duplication removal function described above performs processing such that only one position information is registered from the same workpiece W.

The present embodiment provides a user interface with which the user can easily set an image capturing start condition as described above. Implementation examples of such a user interface will be described later in detail as Embodiments 1 to 4.

<E. User Support Apparatus>

First, an example of a user support apparatus that provides a user interface with which an image capturing start condition as described above can be set with ease will be described. Typically, the user support apparatus of the present embodiment is implemented as the support apparatus 600 (Fig. 1) connected to the vision sensor 100 and the robot control apparatus 200 via the network NW. In other words, the support apparatus 600 corresponds to a user support apparatus for an image processing system including a vision sensor 100.

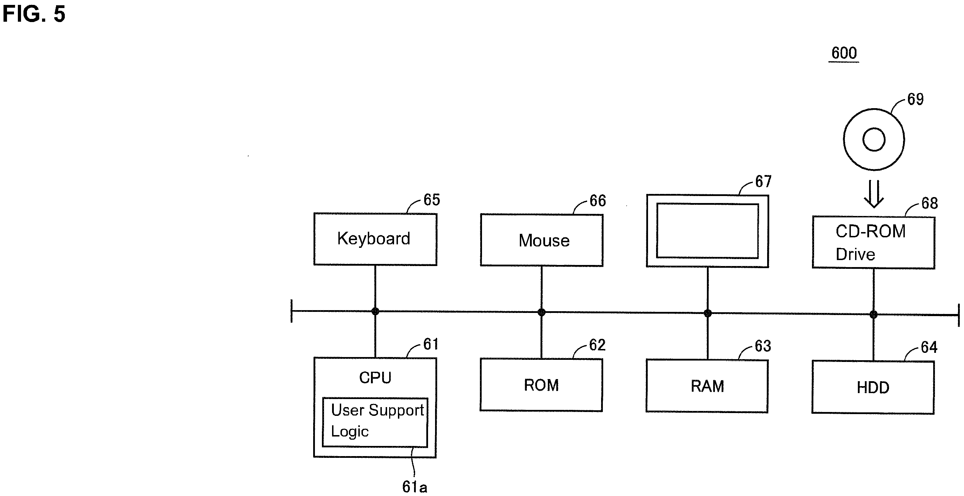

Fig. 5 is a schematic diagram showing the hardware configuration of the support apparatus 600 connectable to the vision sensor 100 according to an embodiment of the present invention. The support apparatus 600 can typically be a general-purpose computer. From the viewpoint of ease of maintenance, the support apparatus 600 is preferably a notebook personal computer with good portability.

As shown in Fig. 5, the support apparatus 600 includes a CPU 61 for executing various types of programs including an OS, a ROM (Read Only Memory) 62 for storing a BIOS and various types data, a memory RAM 63 for providing a work region for storing data required to execute a program in the CPU 61 and a hard disk (HDD) 64 for storing programs and the like executed by the CPU 61 in a nonvolatile manner.

The support apparatus 600 further includes a keyboard 65 and a mouse 66 for receiving user operations and a monitor 67 for presenting information to the user.

As will be described later, various types of programs executed by the support apparatus 600 are stored in a CD-ROM 69 and distributed. In other words, the programs for implementing the user support apparatus of the present embodiment (or in other words, the programs for providing a user interface) are stored in the CD-ROM 69. These programs are read out by a CD-ROM (Compact Disk-Read Only Memory) drive 68 and stored in the hard disk (HDD) 64 or the like. It is of course possible to use a configuration in which the programs are downloaded into the support apparatus 600 from the upper host computer or the like via a network.

By the programs for implementing the user support apparatus being installed on the support apparatus 600, a user support logic 61 a is implemented in the CPU 61. The user support logic 61 a provides a user support function as described later. There are cases where the user support apparatus of the present embodiment exchanges necessary data with the vision sensor 100 and/or the robot control apparatus 200. In such a case, it can be said that the support apparatus 600 and the vision sensor 100 and/or the robot control apparatus 200 cooperate to provide the user support function. Also, there are cases where the user support logic 61 a generates various types of display screens by using a common module (library) or the like provided by the operation system (OS) executed in the support apparatus 600. Accordingly, the program for implementing the user support function may not be included in the general-purpose part provided by the OS. However, such a case is also encompassed by the scope of the present invention. Furthermore, besides the case where the user support logic 61 a is implemented by the CPU 61 executing a program, all or part of the user support logic 61 a may be implemented by using dedicated hardware.

As described above, the support apparatus 600 can be implemented using a general-purpose computer, and therefore a further detailed description thereof will not be given here.

Also, the user support apparatus of the present embodiment may be embodied as the operation display apparatus 500, and the user support function may be provided in the vision sensor 100.

<F. Calibration>

Calibration for obtaining various types of parameters for implementing the user support function according to the present embodiment will be described next.

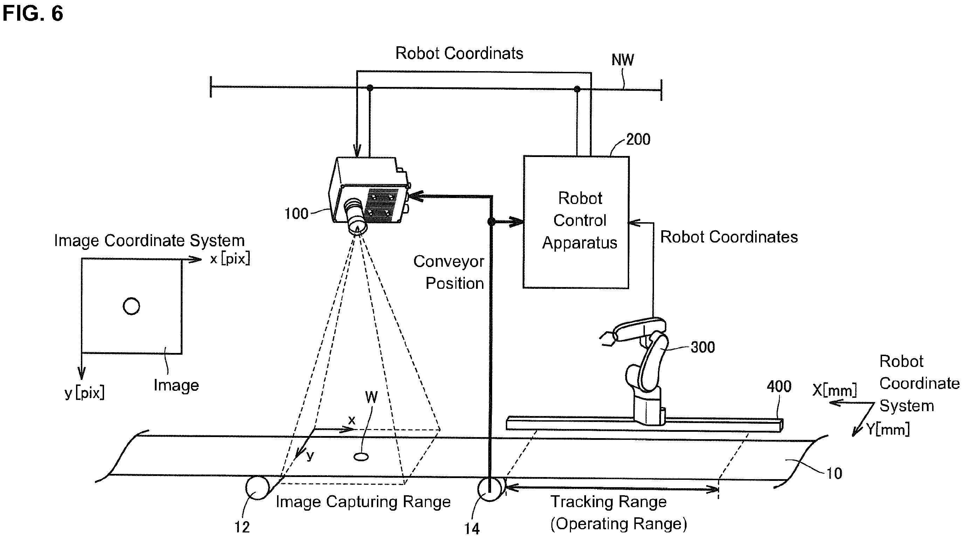

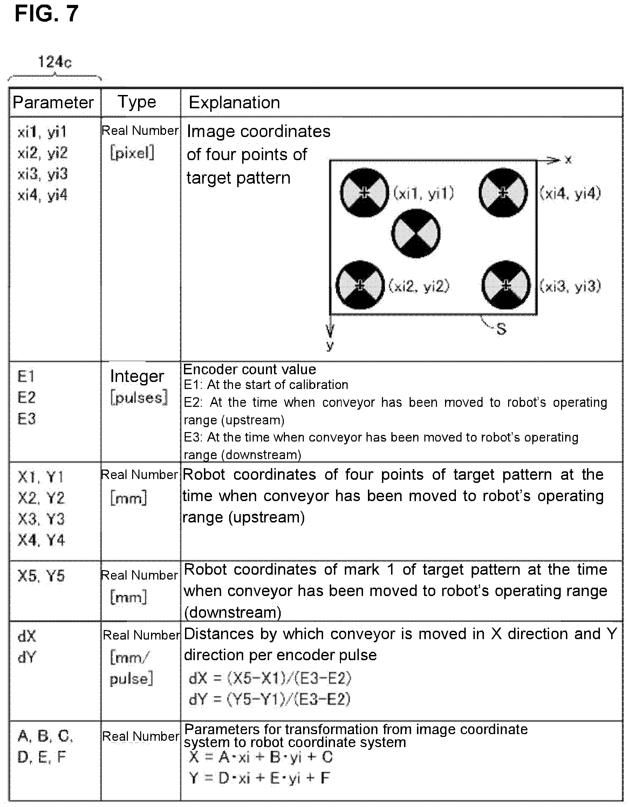

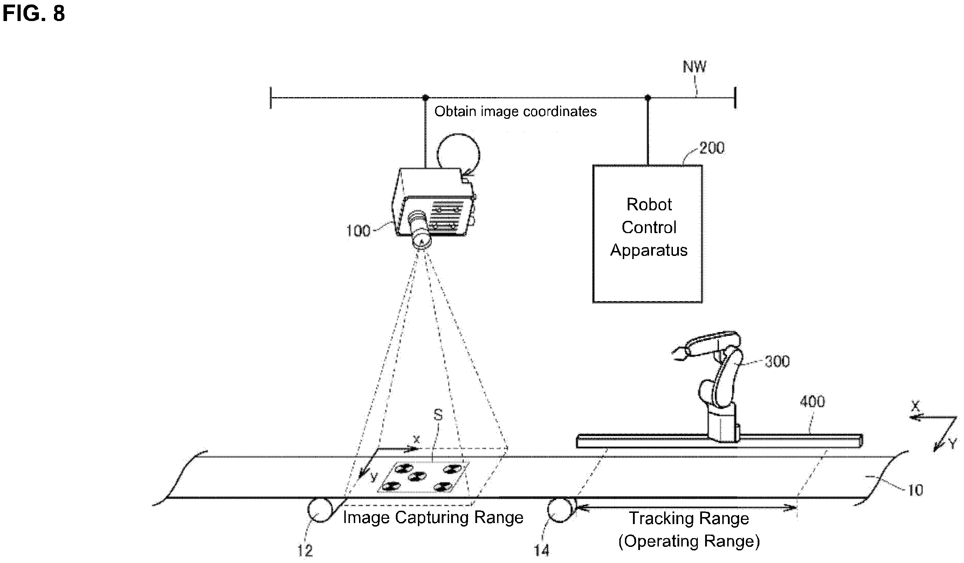

Fig. 6 is a diagram illustrating calibration according to an embodiment of the present invention. Fig. 7 is a diagram showing an example of a parameter set obtained by calibration shown in Fig. 6. Figs. 8 to 10 are diagrams illustrating a procedure of calibration according to an embodiment of the present invention.

As shown in Fig. 6, in the calibration according to the present embodiment, the following two types of calibration are mainly performed.

(1) Calibration between robot and conveyor

In this calibration, the amount of movement of the conveyor per pulse of the pulse signal from the encoder 14 is obtained. The amount of movement of the conveyor obtained here corresponds to dX and dY shown in the second row from the bottom of Fig. 7. The amount of movement of the conveyor is a parameter necessary for the robot 300 to trace (track) the position of a workpiece on the conveyor 10 in response to a pulse signal from the encoder 14.

(2) Calibration between vision sensor and robot

A relational equation for transforming the position information (coordinates (xi, yi) [pixel] in the image coordinate system) of a workpiece measured by the vision sensor 100 to coordinates (X, Y) [mm] in the robot coordinate system is obtained. The relational equation is defined by six parameters A to F shown in the bottom row of Fig. 7.

As shown in Fig. 6, performing calibration requires position information (robot coordinates) from the robot 300, and thus the position information is transferred from the robot control apparatus 200 to the vision sensor 100 via the network NW.

A procedure of the calibration will be described next in further detail. As will be described later, with the conveyor system of the present embodiment, the user can easily perform a calibration simply by operating the system in accordance with a designated procedure without understanding the meaning of calibration described above. More specifically, the calibration of the present embodiment is implemented through a procedure involving three stages shown in Figs. 8 to 10.

In the calibration of the present embodiment, a calibration sheet S as shown in the top row of Fig. 7 is used, in which a target pattern is depicted. The target pattern shown in the calibration sheet S includes five circles (marks), each divided into colored 90-degree quadrants. As will be described later, basically, the calibration is performed using four marks, and the additionally arranged one is used to consistently set the orientation of the calibration sheet S in a predetermined direction.

(First Stage)

In the first stage, as shown in Fig. 8, the user places a calibration sheet S in which a target pattern is depicted within the field of view of the vision sensor 100 (image capturing unit 110). The user then gives an image capture instruction to the vision sensor 100. In response thereto, the vision sensor 100 performs measurement processing on an image obtained by image capturing (the image including the target pattern as an object), and determines the coordinates of the center point of each of four marks arranged at four corners of the target pattern. Through this, the coordinates [pixel] of each of the four marks of the target pattern in the image coordinate system are obtained. Four sets of coordinates obtained here correspond to (xi1, yi1), (xi2, yi2), (xi3, yi3) and (xi4, yi4) shown in the top row of Fig. 7.

(Second Stage)

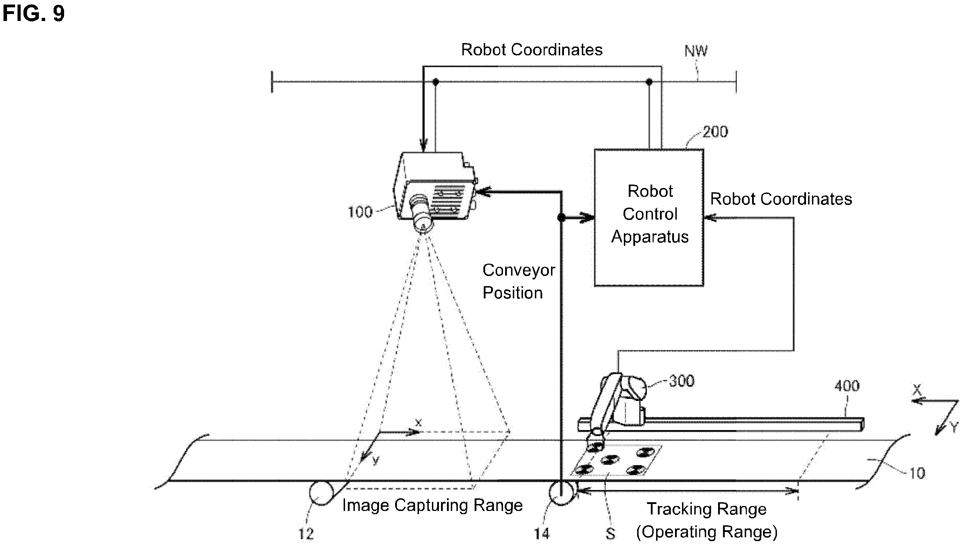

In the second stage, as shown in Fig. 9, the user moves the conveyor 10 so as to bring the calibration sheet S in which the target pattern is depicted within the tracking range (operating range) of the robot 300 and operates the robot 300 so as to associate the positions of the four marks of the target pattern with the position of the robot 300.
More specifically, first, the user moves the conveyor 10 so as to bring the calibration sheet S within the tracking range (operating range) of the robot 300. It is assumed that the count value before the conveyor 10 is moved (at the start of calibration) has been obtained in advance. This count value corresponds to an encoder count value E1 (at the start of calibration) shown in the second row from the top of Fig. 7.
Subsequently, the user operates the teaching pendant 2100 attached to the robot control apparatus 200 or the like so as to position the hand tip of the robot 300 to face one of the marks of the calibration sheet S. By the user giving an instruction in that positioned state, the position information of the robot 300 held by the robot control apparatus 200 (the coordinates in the robot coordinate system that indicate the position of the hand tip of the robot 300) is transmitted to the vision sensor 100. The processing for positioning the hand tip of the robot 300 and transmitting the position information of the robot 300 in the positioned state to the vision sensor 100 is repeatedly executed for all of the four marks of the target pattern.
Through the procedure as described above, the position information of the robot 300 corresponding to each of the four marks of the target pattern is obtained. The obtained position information of the robot 300 corresponding to the four marks correspond to (X1, Y1), (X2, Y2), (X3, Y3) and (X4, Y4) shown in the third row from the top of Fig. 7.
As shown in Fig. 9, the state in which the calibration sheet S is within the tracking range (operating range) of the robot 300 is maintained until the position information of the robot 300 corresponding to all of the four marks are transmitted to the vision sensor 100.
Also, the vision sensor 100 stores the count value obtained in the state shown in Fig. 9. This count value corresponds to an encoder count value E2 (at the time when the conveyor has been moved to the robot's operating range (upstream)) shown in the second row from the top of Fig. 7.

(Third Stage)

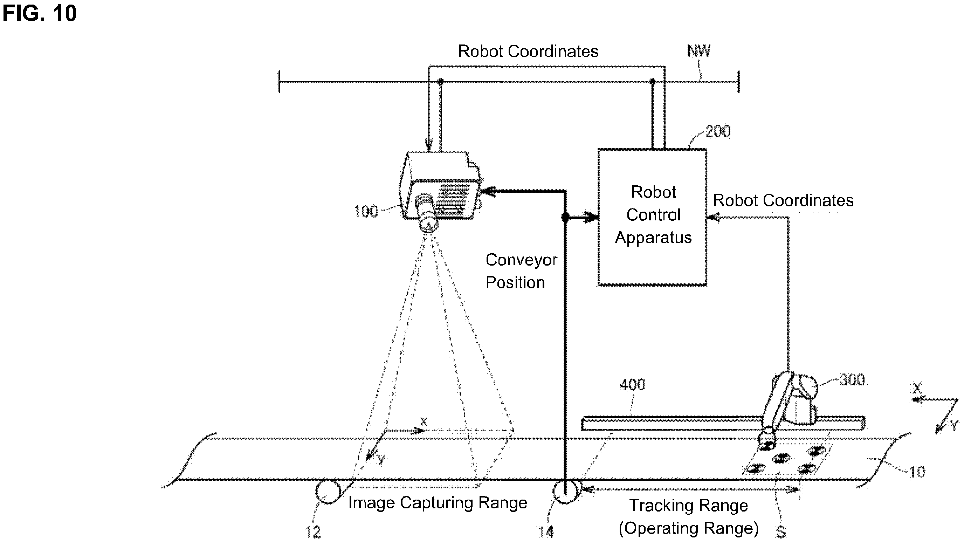

In the third stage, as shown in Fig. 10, the user further moves the conveyor 10 so as to bring the calibration sheet S to the most downstream position of the tracking range (operating range) of the robot 300, and operates the robot 300 so as to associate the position of one of the marks of the target pattern with the position of the robot 300.
More specifically, first, the user moves the conveyor 10 so as to bring the calibration sheet S to the downstream end of the tracking range (operating range) of the robot 300.
Subsequently, the user operates the teaching pendant 2100 or the like so as to position the hand tip of the robot 300 to face the first mark of the calibration sheet S (the one that obtained coordinates (X1, Y1) in the second stage). By the user giving an instruction in that positioned state, the position information of the robot 300 held by the robot control apparatus 200 (the coordinates in the robot coordinate system that indicate the position of the hand tip of the robot 300) is transmitted to the vision sensor 100.
Through the procedure as described above, the position information of the robot 300 corresponding to the first mark of the target pattern is obtained. The obtained position information of the robot 300 corresponding to the first mark corresponds to (X5, Y5) shown in the fourth row from the top of Fig. 7.
Also, the vision sensor 100 stores the count value obtained in the state shown in Fig. 10. This count value corresponds to an encoder count value E3 (at the time when the conveyor has been moved to the robot's operating range (downstream)) shown in the second row from the top of Fig. 7.

(Parameter Calculation Processing)

Using the parameters obtained by the processing of the first to the third stages as described above, first, the amounts of movement dX and dY of the workpiece per count from the encoder 14 are calculated. More specifically, the amounts of movement are calculated by the following equations.
$$dX = (X5-X1)/(E3-E2)$$

$$dY = (Y5-Y1)/(E3-E2)$$

These equations are for finding the amount of change in the position information of the robot 300 with respect to the amount of change in the count value, which occurs between the state shown in Fig. 9 and the state shown in Fig. 10 when the hand tip of the robot 300 is positioned to the same mark in the calibration sheet S. With these arithmetic equations, the amounts of movement dX and dY of the workpiece per count are determined. In other words, calibration between robot and conveyor is implemented.

Also, six parameters A to F of a transformation equation for coordinate system transformation are determined based on correspondences between respective coordinates (xi1, yi1), (xi2, yi2), (xi3, yi3) and (xi4, yi4) in the image coordinate system obtained in Fig. 8 and coordinates (X1, Y1), (X2, Y2), (X3, Y3) and (X4, Y4) in the robot coordinate system obtained in Fig. 9. In other words, parameters A to F that satisfy the following equations (or that yield the least error) are determined by a known technique.

$$X = A \cdot xi + B \cdot yi + C$$

$$Y = D \cdot xi + E \cdot yi + F$$

Calibration between vision sensor and robot is thereby implemented.

<G. Embodiment 1>

(g1: Overview)

First, as Embodiment 1, an example will be described in which in response to the user designating a region to be registered as a model, an image capturing start condition is automatically set. The automatically set image capturing start condition is treated as so-called default settings, and the user can freely change the image capturing start condition as needed.

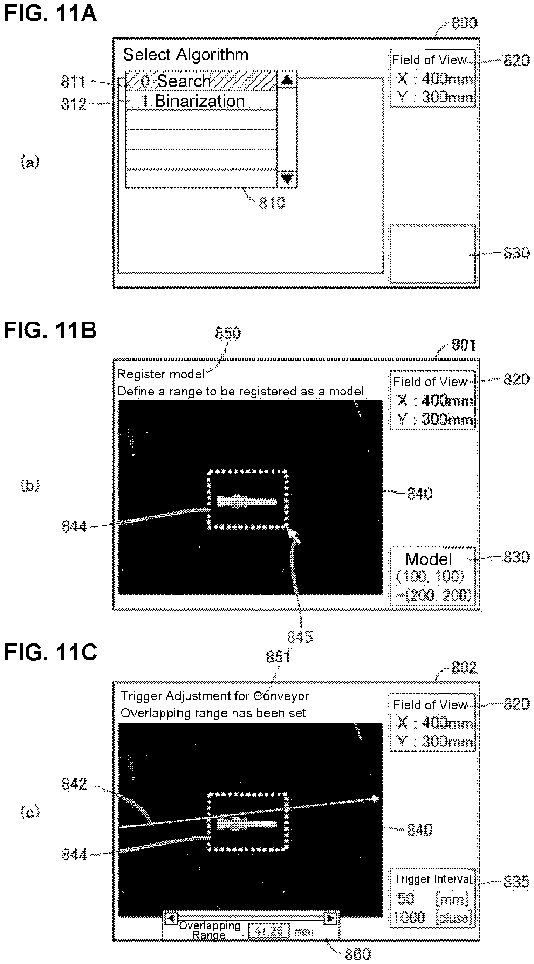

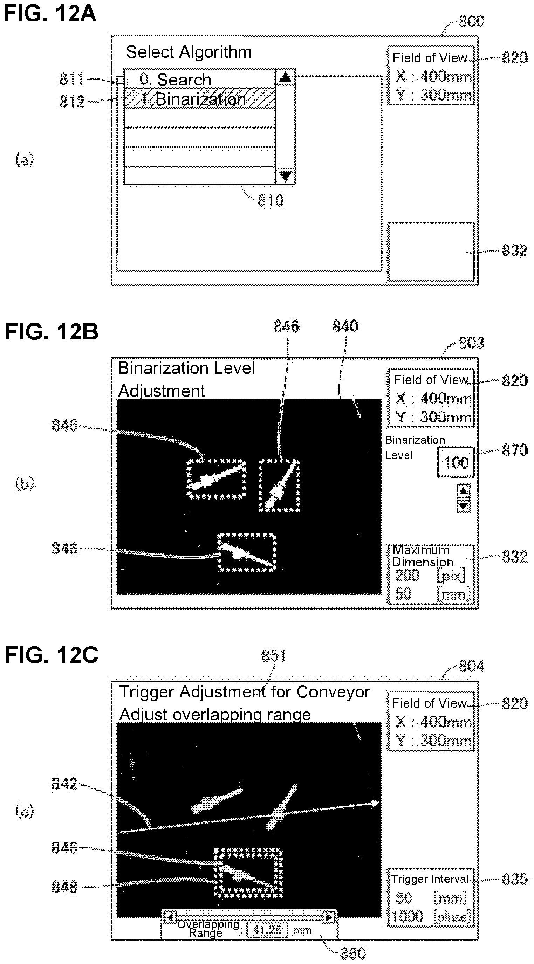

Figs. 11 and 12 are diagrams showing examples of a user interface according to Embodiment 1 of the present invention. Fig. 11 shows examples of a user interface used when search processing (pattern matching processing) is performed as measurement processing, and Fig. 12 shows examples of a user interface used when binarization processing is performed as measurement processing. In other words, in the search processing shown in Fig. 11, a model indicating a workpiece to be detected is pre-registered, and a region that matches the registered model is searched for. In the binarization processing shown in Fig. 12, binarization processing is performed on an input image, and a portion (white region or black region) that is distinguished from other regions is detected as a workpiece by the binarization processing.

(g2: Search Processing)

A user interface for setting an image capturing start condition when search processing is used as measurement processing will be described first with reference to Fig. 11.

When an instruction to start the user support function of the present embodiment is issued, as shown in Fig. 11 (a), a guidance screen 800 having a menu for selecting measurement processing is displayed on the monitor 67 (Fig. 5). The guidance screen 800 includes a menu portion 810 in which a list of measurement processing is presented and a field display portion 820 in which the actual dimensions of the field of view (image capturing range) of the image capturing unit 110 are shown (the physical length and width of the conveying apparatus).

When the user has selected a line 811 indicating "0. Search", which means search processing, in the menu portion 810 shown in Fig. 11 (a), the screen transitions to a guidance screen 801 shown in Fig. 11 (b). As shown in Fig. 11 (b), the guidance screen 801 includes a display region 840 that displays an image obtained by image capturing with the image capturing unit 110. The image displayed in the display region 840 can be selected from a mode (through mode) in which the image is sequentially updated according to the timing of image capturing with the image capturing unit 110 and a mode (freeze mode) in which the image obtained by image capturing with the image capturing unit 110 at a certain timing is displayed.

The guidance screen 801 is a screen that is for prompting the user to designate a region that indicates a workpiece to be detected and that indicates "Define a range to be registered as a model". The user designates a region indicating a workpiece to be detected in the image displayed in the display region 840 of the guidance screen 801. Specifically, the user designates a model region 844 with a cursor 845 by using the mouse 66 (Fig. 5), or the like. The model region 844 can be designated by any method using an input means.

The model region 844 designated by the user is explicitly shown on the image in the display region 840. When the model region 844 has been set, the position information of the model region 844 in the image is displayed in a model range display portion 830. In the model range display portion 830, typically, two sets of coordinates on the diagonal line of the model region 844 are displayed.

Upon completion of setting of the model region 844 in the guidance screen 801 shown in Fig. 11 (b), an image capturing start condition (trigger interval) is determined by a calculation logic as described later. When the image capturing start condition has been determined, the screen transitions to a guidance screen 802 shown in Fig. 11 (c). The guidance screen 802 includes an image capturing start condition display portion 835 that indicates the image capturing start condition. In the image capturing start condition display portion 835, the image capturing start condition (trigger interval) is displayed in terms of the physical length of the conveyor 10 (the length in the robot coordinate system) (50 [mm] in Fig. 11 (c)) and the number of pulses (count value) corresponding to that length (1000 [pulse] in Fig. 11 (c)).

Furthermore, the guidance screen 802 provides an interface for changing the determined image capturing start condition. Specifically, the guidance screen 802 includes an operation bar 860 for the user to freely change the overlapping range length L. The user can finely adjust the image capturing start condition to more preferable values by operating the operation bar 860 while viewing the image displayed in the display region 840 and the size of the model region 844 set in the image in the display region 840.

The conveyance direction of the conveyor 10 is not always parallel to one of the sides of the image capturing range of the image capturing unit 110, and thus a conveyance direction indicator 842 that indicates the conveyance direction of the conveyor 10 is displayed on the display region 840 in an overlaid manner. The conveyance direction indicator 842 is generated by using the amounts of movement dX (X direction) [mm/pulse] and dY (Y direction) [mm/pulse] of the workpiece per count from the encoder 14, which were obtained by the above-described calibration.

Next, a logic for determining the image capturing start condition according to the model region 844 designated by the user as shown in Fig. 11 will be described. It is assumed that the amounts of movement dX and dY of a workpiece per count of the pulse signal and six parameters A to F for transformation from the image coordinate system to the robot coordinate system have been obtained in advance by the above-described calibration and that the size (width WD and height HT [pixel]) of an image obtained by image capturing with the image capturing unit 110 is known.

The image capturing start condition is calculated by using the settings of measurement processing (search processing) that have been set in the guidance screen shown in Fig. 11. More specifically, the image capturing start condition is determined such that the length in the conveyance direction of the overlapping range between image capturing ranges that are captured consecutively is greater than the length of the diagonal line of the region indicating the workpiece to be detected.

In other words, the image capturing start condition (trigger interval) can be expressed by the following schematic mathematical equation:

$$\text{(trigger interval)} = \{\text{(image size)} - \text{(the diagonal line of the circumscribed rectangle of the region to be registered as a model)}\}/\text{(the amount of movement per encoder pulse)}.$$

However, as an implementation, the image capturing start condition may be determined by focusing attention only to the component in either the X axis direction or the Y axis direction of the robot coordinate system in which the workpiece W moves by an amount greater than the other, rather than calculating the length of the diagonal line. This reduces the resources required for calculation. In other words, the trigger interval is calculated by using either of the following equations depending on which of the amount of movement dX of the workpiece W in the X direction and the amount of movement dY of the workpiece W in the Y direction is greater or smaller. Here, the overlapping range length is indicated by L [pixel].

(1) In the case of dX > dY

$$(\text{Trigger interval}) = \{A \cdot (WD-L)\}/dX \ [\text{pulse}]$$

(2) In the case of $dX \leq dY$

$$(\text{Trigger interval}) = \{D \cdot WD + E \cdot (HT-L)\}/dY \ [\text{pulse}]$$

When the overlapping range length L has been changed by the user operating the operation bar 860 shown in Fig. 11 (c), or the like, recalculation of the equation is performed and the image capturing start condition (trigger interval) is updated.

The above processing can be summarized as follows. The support function of the present embodiment determines an overlapping range between image capturing ranges in the image displayed on the monitor 67 serving as a display means in response to a user operation, and determines an image capturing start condition of the image capturing unit 110 defined in terms of the amount of movement of the conveyor 10 based on the size of the determined overlapping range by using the relationship between the image capturing range of the image capturing unit 110 and the property of the conveyor 10 (conveying apparatus).

Specifically, the monitor 67 serving as a display means displays an image obtained by image capturing with the image capturing unit 110 of the vision sensor 100. Then, the keyboard 65 and/or the mouse 66 serving as an input means receives a designation of a region indicating a workpiece to be detected in the image displayed on the monitor 67. The received instruction is transferred to the CPU 61 (user support logic 61 a). The CPU 61 (user support logic 61 a) determines an image capturing start condition of the image capturing unit 110 defined in terms of the amount of movement (number of pulses) of the conveyor 10 (conveying apparatus), using a relationship between the image capturing range of the image capturing unit 110 and a property of the conveyor 10 (conveying apparatus). Specific examples of the relationship between the image capturing range of the image capturing unit 110 and the property of the conveyor 10 include a transformation function including the amounts of movement dX (X direction) and dY (Y direction) of a workpiece per count of the pulse signal and the six parameters A to F for transformation from the image coordinate system to the robot coordinate system. Furthermore, the CPU 61 (user support logic 61 a) changes the determined image capturing start condition in response to a user operation as shown in the operation bar 860 of Fig. 11 (c).

At this time, the CPU 61 (user support logic 61a) determines the image capturing start condition such that the overlapping range between image capturing ranges that are captured consecutively includes at least a region indicating a workpiece to be detected. In other words, the CPU 61 (user support logic 61 a) determines the image capturing start condition such that the length in the conveyance direction of the overlapping range between the image capturing ranges that are captured consecutively is greater than the length of the diagonal line of the region indicating the workpiece to be detected.

(g3: Binarization Processing)

A user interface for setting an image capturing start condition when binarization processing is used as measurement processing will be described next with reference to Fig. 12.

When an instruction to start the user support function of the present embodiment is issued, the same guidance screen 800 as in Fig. 11 (a) having a menu for selecting measurement processing is displayed on the monitor 67 (Fig. 5) (Fig. 12(a)).

When the user has selected a line 812 indicating "1. Binarization", which means binarization processing, in the menu portion 810 shown in Fig. 12(a), the screen transitions to a guidance screen 803 shown in Fig. 12(b). In the guidance screen 803 shown in Fig. 12(b), a resultant image obtained by execution of binarization processing on the image obtained by image capturing with the image capturing unit 110 is displayed in the display region 840. Specifically, a monochrome image in which each pixel has been quantized (binarized) to "black" or "white" is displayed in the display region 840. The threshold value (binarization level) of the binarization processing can be changed freely by the user setting an arbitrary value (for example, 0 to 255) in a level setting box 870.

The user can set an appropriate binarization level while viewing the resultant image displayed on the display region 840. After execution of the binarization processing, the CPU 61 (user support logic 61 a) identifies regions having fewer color pixels ("white" region in the example shown in Fig. 12(b)) in the resultant image, and identifies workpieces to be detected by grouping. Furthermore, the CPU 61 determines circumscribed rectangle regions 846 that surround the identified workpieces. Furthermore, in the case where a plurality of circumscribed rectangles have been extracted, a circumscribed rectangle having the longest diagonal line is identified, and the longest diagonal line is determined as the maximum workpiece size (maximum workpiece dimension). Information regarding the maximum workpiece dimension is displayed in a maximum dimension display portion 832.

When the maximum workpiece dimension has been determined in the manner described above, an image capturing start condition (trigger interval) is determined by a calculation logic as described later. When the image capturing start condition has been determined, the screen transitions to a guidance screen 804 shown in Fig. 12(c). In the image capturing start condition display portion 835 of the guidance screen 804, the image capturing start condition (trigger interval) is displayed in terms of the physical length of the conveyor 10 (the length in the robot coordinate system) (50 [mm] in Fig. 12(c)) and the number of pulses (count value) corresponding to that length (1000 [pulse] in Fig. 12(c)).

Furthermore, the guidance screen 804 provides an interface for changing the determined image capturing start condition. Specifically, the guidance screen 802 includes an operation bar 860 for the user to freely change the overlapping range length L. The user can finely adjust the image capturing start condition to more preferable values by operating the operation bar 860 while viewing the image displayed in the display region 840, the circumscribed rectangle region 846 that has been set in the image in the display region 840 and a circumscribed rectangle region 848 indicating a changed size. At this time, it is preferable that both the circumscribed rectangle region 846 as the initial value (default value) calculated from the image obtained by binarization processing and the circumscribed rectangle region 848 that has been changed by a user operation are displayed on the resultant image in an overlaid manner.

The conveyance direction of the conveyor 10 is not always parallel to one of the sides of the image capturing range of the image capturing unit 110, and thus a conveyance direction indicator 842 that indicates the conveyance direction of the conveyor 10 is displayed on the display region 840 in an overlaid manner in Fig. 12(c) as well.

Next, a logic for determining the image capturing start condition according to the circumscribed rectangle region 846 designated by the user as shown in Fig. 12 will be described. As above, it is assumed that the amounts of movement dX and dY of a workpiece per count of the pulse signal and six parameters A to F for transformation from the image coordinate system to the robot coordinate system have been obtained in advance and that the size (width WD and height HT [pixel]) of an image obtained by image capturing with the image capturing unit 110 is known.

The image capturing start condition is calculated by using the maximum workpiece dimension calculated or set in the guidance screen shown in Fig. 12. More specifically, the image capturing start condition is determined such that the length in the conveyance direction of the overlapping range between image capturing ranges that are captured consecutively is greater than the maximum dimension of the target workpiece (the length of the diagonal line of the rectangular region).

In other words, the image capturing start condition (trigger interval) can be expressed by the following schematic mathematical equation:

$$\text{(trigger interval)} = \{\text{(image size)} - \text{(the largest diameter of workpiece)}\}/\text{(the amount of movement per encoder pulse)}.$$

However, as an implementation, the image capturing start condition may be determined by focusing attention only to the component in either the X axis direction or the Y axis direction of the robot coordinate system in which the workpiece W moves by an amount greater than the other, rather than calculating the length of the diagonal line. This reduces the resources required for calculation. In other words, the trigger interval is calculated by using the equations described above with reference to Fig. 11.

When the overlapping range length L is changed by the user operating the operation bar 860 shown in Fig. 12 (c), or the like, recalculation of the equation is performed and the image capturing start condition (trigger interval) is updated.

The above processing can be summarized as follows. The support function of the present embodiment determines an overlapping range from the range detected by measurement processing (typically, binarization processing) in the image displayed in the monitor 67 serving as a display means, and determines an image capturing start condition of the image capturing unit 110 defined in terms of the amount of movement of the conveyor 10 based on the size of the determined overlapping range by using the relationship between the image capturing range of the image capturing unit 110 and the property of the conveyor 10 (conveying apparatus). Specifically, the monitor 67 serving as a display means displays an image obtained by image capturing with the image capturing unit 110 of the vision sensor 100. At this time, a measurement means for performing measurement processing (binarization processing) on the image obtained by image capturing with the image capturing unit 110 is mounted, and the monitor 67 displays the result of measurement processing (resultant image).

The CPU 61 (user support logic 61 a) determines an image capturing start condition of the image capturing unit 110 defined in terms of the amount of movement (the number of pulses) of the conveyor 10 (conveying apparatus) based on the size of the region indicating a workpiece to be detected by using the relationship between the image capturing range of the image capturing unit 110 and the property of the conveyor 10 (conveying apparatus). As described above, specific examples of the relationship between the image capturing range of the image capturing unit 110 and the property of the conveyor 10 include a transformation function including the amounts of movement dX and dY of a workpiece per count of the pulse signal and the six parameters A to F for transformation from the image coordinate system to the robot coordinate system. Furthermore, the CPU 61 (user support logic 61a) changes the determined image capturing start condition in response to a user operation as shown in the operation bar 860 of Fig. 12(c). Specifically, the keyboard 65 and/or the mouse 66 serving as an input means receives a designation of a region indicating a workpiece to be detected in the image displayed on the monitor 67. The received instruction is transferred to the CPU 61 (user support logic 61 a).

And, the CPU 61 (user support logic 61 a) determines the image capturing start condition such that the overlapping range between image capturing ranges that are captured consecutively includes at least a region indicating a workpiece to be detected. To rephrase, the CPU 61 (user support logic 61 a) determines the image capturing start condition such that the length in the conveyance direction of the overlapping range between image capturing ranges that are captured consecutively is greater than the length of the diagonal line of the region indicating the workpiece to be detected.

(g4: Flowchart)

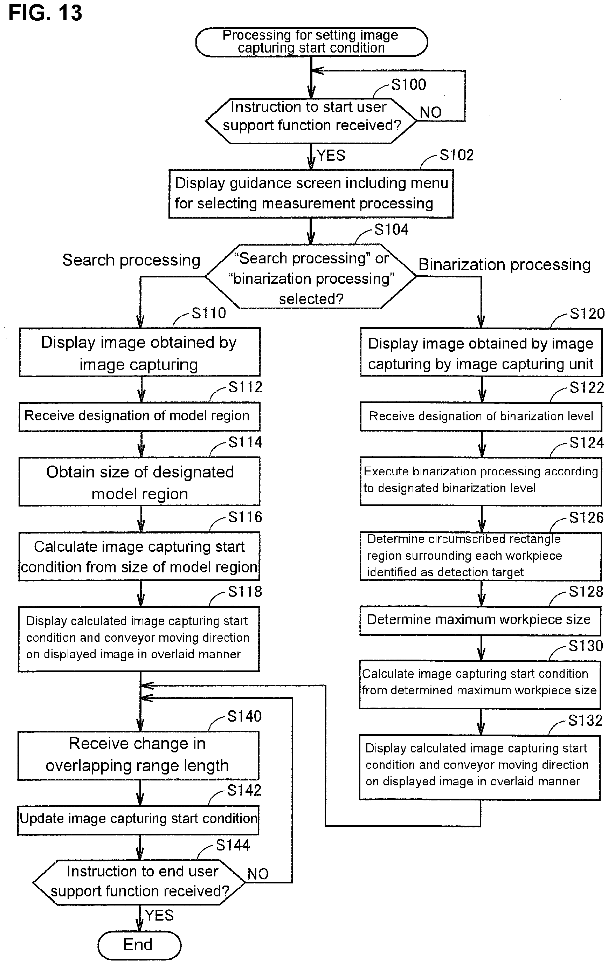

A procedure of processing for setting an image capturing start condition according to Embodiment 1 described above will be described next. Fig. 13 is a flowchart illustrating a procedure of processing for setting an image capturing start condition according to Embodiment 1 of the present invention. As shown in Fig. 13, when an instruction to start the user support function has been issued (YES in step S100), the CPU 61 (user support logic 61 a) displays a guidance screen, as shown in Figs. 11 (a) and 12(a), that includes a menu for selecting measurement processing (step S102). Then, the CPU 61 determines which of "search processing" and "binarization processing" has been selected (step S104). If it is determined that "search processing" has been selected ("search processing" in step S104), the procedure advances to step S110. If it is determined that "binarization processing" has been selected ("binarization processing" in step S104), the procedure advances to step S120.

In step S110, the CPU 61 displays an image obtained by image capturing with the image capturing unit 110 (step S110) and receives a designation of a model region 844 from the user (step S112). When the model region 844 has been designated by the user, the CPU 61 obtains the size of the designated model region 844 (step S114) and calculates an image capturing start condition (trigger cycle; overlapping range length L) from the size (the length of the diagonal line) of the model region 844 (step S116). Furthermore, the CPU 61 displays the calculated image capturing start condition, the conveyor moving direction and the like on the displayed image in an overlaid manner (step S118).

In step S120, the CPU 61 displays an image obtained by image capturing with the image capturing unit 110 and receives a designation of the binarization level from the user (step S122). When the binarization level has been designated by the user, the CPU 61 executes binarization processing according to the designated binarization level (step S124). Subsequently, the CPU 61 groups the identified pixels included in the resultant image obtained by the binarization processing and determines circumscribed rectangle regions 846 each surrounding a workpiece identified as a detection target (step S126). Furthermore, the CPU 61 identifies the circumscribed rectangle region 846 having the longest diagonal line from among the determined circumscribed rectangle regions 846 and determines the longest diagonal line as the maximum workpiece size (maximum workpiece dimension) (step S128). The CPU 61 calculates the image capturing start condition (trigger cycle; overlapping range length L) from the determined maximum workpiece size (maximum workpiece dimension) (step S130). Furthermore, the CPU 61 displays the calculated image capturing start condition, the conveyor moving direction and the like on the displayed image in an overlaid manner (step S132).

After that, the CPU 61 receives a change in the overlapping range length L from the user (step S140). Specifically, the user finely adjusts the overlapping range length L to an appropriate value while viewing the image (or resultant image) displayed on the guidance screen, the displayed regions and the like. When the overlapping range length L has been changed by the user, in response thereto, the CPU 61 updates the image capturing start condition (step S142).

The CPU 61 repeats the processing from step S140 until it receives an instruction to end the user support function (YES in step S144).

<H. Embodiment 2>

(h1: Overview)

Next, as Embodiment 2, an example will be described in which in the case where the size of a workpiece to be tracked is known, an image capturing start condition is automatically set by the user setting the workpiece size. For example, in general production lines, it is often the case that the size of a product or semi-finished product is known from the design specification, the mold size or the like. In such a case, an image capturing start condition (overlapping range length) may be determined from the information regarding the workpiece size without actually performing image capturing using the image capturing unit 110.

As in Embodiment 1 described above, the determined image capturing start condition is treated as so-called default settings, and the user can freely change the image capturing start condition as needed.

(h2: Example Guidance Screen 1)

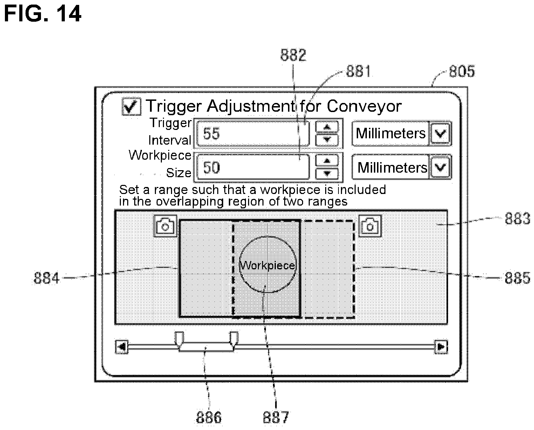

Fig. 14 is a diagram showing an example of a user interface according to Embodiment 2 of the present invention. When an instruction to start the user support function of the present embodiment has been issued, a guidance screen 805 as shown in Fig. 14 is displayed on the monitor 67 (Fig. 5). The guidance screen 805 includes a numerical value box 881 for inputting (changing) the trigger interval as an image capturing start condition and a numerical value box 882 for inputting the workpiece size. Fig. 14 shows an example in which both the trigger interval and the workpiece size are input as values used in the robot coordinate system (for example, values in a unit of "millimeter"), which are the most practical, but may be input as values used in the image coordinate system (for example, "the number of pixels or pixels") or the number of pulses.

First, when the workpiece size has been input, a circular mark 887 that indicates the size of a work piece to be detected, and a first image capturing range 884 and a second image capturing range 885 that are associated with the circular mark 887 are displayed in a virtual display region 883. The first image capturing range 884 and the second image capturing range 885 are displayed in a size based on the relative relationship between the size (or in other words, width WD and height HT [pixel]) of the image obtained by image capturing with the vision sensor 100 (image capturing unit 110) and the workpiece size input in the numerical value box 882.

More specifically, the first image capturing range 884 (indicated by a solid line) is set at a position inscribing the workpiece defined by the input workpiece size. The second image capturing range 885 (indicated by a broken line) is initially set such that the entire workpiece is included in the range overlapping the first image capturing range 884 (the overlapping portion between the first and second image capturing ranges). When the first image capturing range 884 and the second image capturing range 885 have been set in the manner described above, an image capturing start condition (trigger interval) is determined based on the set ranges, and the determined image capturing start condition (trigger interval) is displayed in the numerical value box 881.

The guidance screen 805 includes a slide bar 886. The slide bar 886 is linked to the relative position of the second image capturing range 885. By the user operating the slide bar 886, the overlapping range length between the first image capturing range 884 and the second image capturing range 885 is adjusted. Specifically, when the user operates the slide bar 886, the second image capturing range 885 moves in the right-left direction of the paper plane while the positions of the first image capturing range 884 and the circular mark 887 indicating the workpiece size, which are displayed in the virtual display region 883, are fixed. The value of the trigger interval shown in the numerical value box 881 is updated according to the user operation of the slide bar 886.

The initial value of the image capturing start condition can be calculated by the following equations according to the workpiece size input in the numerical value box 882.

$$\text{(Trigger interval)} = \{\text{(image size)} - \text{(workpiece size set by user)}\}/\text{(movement amount per encoder pulse)}$$

However, as an implementation, the image capturing start condition may be determined by focusing attention only to the component in either the X axis direction or the Y axis direction of the robot coordinate system in which the workpiece W moves by an amount greater than the other, rather than calculating the length of the diagonal line. A more specific method of the calculation is the same as that of Embodiment 1 described above, and thus a detailed description thereof is not given here.

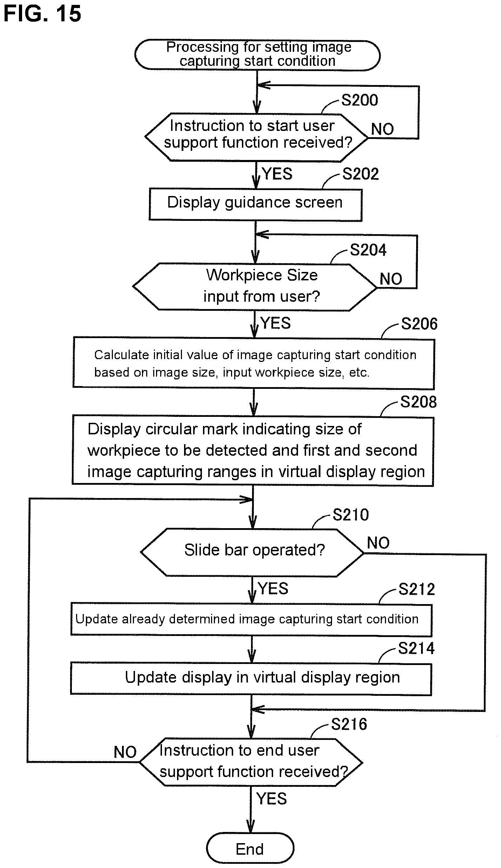

The procedure of processing for setting an image capturing start condition shown in Fig. 14 can be represented as a flowchart shown in Fig. 15. Fig. 15 is a flowchart illustrating a procedure of processing for setting an image capturing start condition according to Embodiment 2 of the present invention.

As shown in Fig. 15, when an instruction to start the user support function has been issued (YES in step S200), the CPU 61 (user support logic 61 a) displays the guidance screen 805 shown in Fig. 14 (step S202). Then, the CPU 61 waits for a workpiece size to be input from the user via the numerical value box 882 (step S204). When the workpiece size has been input (YES in step S204), the CPU 61 calculates the initial value of the image capturing start condition (trigger interval) based on the size of the image captured by the vision sensor 100 (image capturing unit 110), the input workpiece size and the like (step S206). Subsequently, the CPU 61 displays, based on the calculated initial value of the image capturing start condition, a circular mark 887 indicating the size of a workpiece to be detected and first and second image capturing ranges 884 and 885 in the virtual display region 883 (step S208).

Subsequently, the CPU 61 waits for a user operation of the slide bar 886 (step S210). When the slide bar 886 has been operated (YES in step S210), the CPU 61 updates the already determined image capturing start condition according to the amount of operation of the slide bar 886 by the user (step S212), as well as updating the display in the virtual display region 883 (step S214).

The CPU 61 repeats the processing from step S210 until it receives an instruction to end the user support function (YES in step S216).

The above processing can be summarized as follows. The support function of the present embodiment simultaneously displays the range corresponding to a workpiece W conveyed on the conveyor 10 (conveying apparatus) and a plurality of image capturing ranges that are captured consecutively on the monitor 67 serving as a display means, and determines an overlapping range in response to a user operation on the displayed image capturing ranges. Furthermore, an image capturing start condition of the image capturing unit 110 defined in terms of the amount of movement of the conveyor 10 is determined based on the size of the determined overlapping range by using the relationship between the image capturing range of the image capturing unit 110 and the property of the conveyor 10 (conveying apparatus). Specifically, the monitor 67 serving as a display means displays a range (circular mark 887) corresponding to a workpiece conveyed on the conveyor 10 together with image capturing ranges that are captured consecutively (first image capturing range 884 and second image capturing range 885). At this time, the monitor 67 simultaneously displays the image capturing ranges that are captured consecutively. Also, the keyboard 65 and/or the mouse 66 serving as an input means receives a designation of the size of the displayed workpiece (numerical value box 882 in guidance screen 805).

The CPU 61 (user support logic 61 a) determines an image capturing start condition of the image capturing unit 110 defined in terms of the amount of movement of the conveyor 10 based on the positional relationship between the image capturing ranges displayed on the monitor 67 by using the relationship between the image capturing range of the image capturing unit 110 and the physical length of the conveyor 10. Furthermore, the CPU 61 (user support logic 61 a) changes the image capturing range displayed on the monitor 67 in response to a user operation (slide bar 886 in guidance screen 805).

(h3: Example Guidance Screen 2)

In Example Guidance Screen 1 above, as the user interface for setting the overlapping range, an example configuration has been described in which the position of the second image capturing range is slid while the positions of the first image capturing range 884 and the workpiece are fixed. In Example Guidance Screen 2 described below, an example configuration is shown in which the image capturing start condition is set by simulating the actual conveyance path in an image and sliding the position of a workpiece.

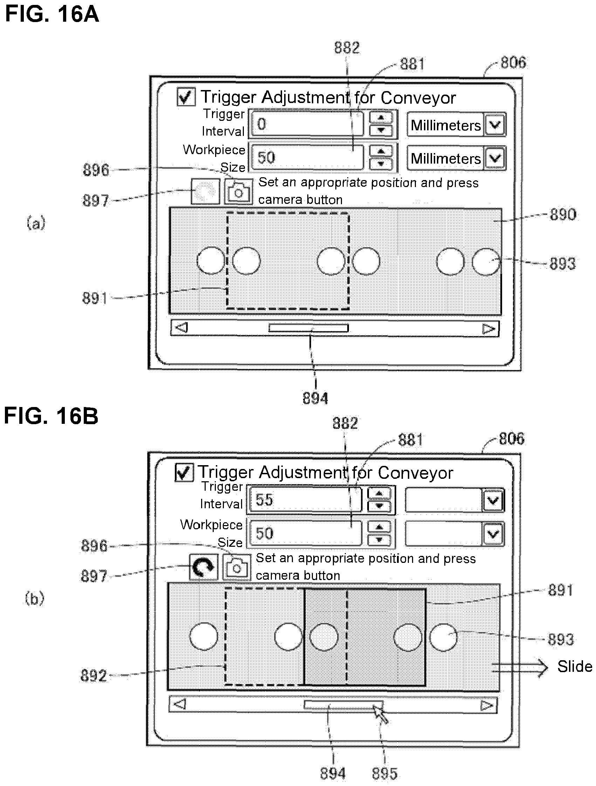

Fig. 16 shows diagrams showing other examples of a user interface according to Embodiment 2 of the present invention. When an instruction to start the user support function of the present embodiment has been issued, first, a guidance screen 806 as shown in Fig. 16(a) is displayed on the monitor 67 (Fig. 5). The guidance screen 806 includes a numerical value box 881 for inputting (changing) the trigger interval as an image capturing start condition and a numerical value box 882 for inputting the workpiece size.

When the workpiece size has been input in the numerical value box 882, circular marks 893, each indicating the size of a workpiece to be detected, are displayed in a virtual display region 890 simulating the actual conveyor. A display range of the virtual display region 890 in which the circular marks 893 are displayed in an overlaid manner is linked to a slide bar 894. By the user operating the slide bar 894, the entire virtual display region 890 slides in the right-left direction of the paper plane. In other words, the image simulating the conveyer and showing workpieces moves in response to a slide operation of the slide bar 894.

The user operates the slide bar 894. In a state in which circular marks 893 each indicating a workpiece are in an appropriate position, the user selects a camera icon 896 by using a cursor 895 or the like that moves in response to movements of the mouse. In response thereto, a first image capturing range 891 as shown in Fig. 16(a) is set. Here, before the camera icon 896 is selected, a region that can be set as the first image capturing range 891 is displayed with an indication indicating that it is unconfirmed (with a broken line in the example of Fig. 16(a)), and after the camera icon 896 has been selected, the region is displayed with an indication indicating that it has been set as the first image capturing range 891 (with a solid line in the example of Fig. 16(b)).

Once the first image capturing range 891 has been set, the relative position of the first image capturing range 891 (displayed workpieces) with respect to the virtual display region 890 is fixed. In other words, the set first image capturing range 891 is linked to the movement of the slide bar 894 by the user and slides in the right-left direction of the paper plane. At this time, a redo icon 897 is deactivated (grayed out).

Subsequently, in the state in which the first image capturing range 891 has been set, the user further operates the slide bar 894 so as to slide the virtual display region 890 and adjusts a relative distance with respect to the already set first image capturing range 891. In this case as well, a region that can be set as a second image capturing range 892 is displayed with an indication indicating that it is unconfirmed (with a broken line in the example of Fig. 16(b)).

The user compares the first image capturing range 891 (solid line) and the unconfirmed second image capturing range 892 (broken line) which are overlaid on the virtual display region 890 so as to determine the degree of overlapping of the two ranges. The user makes adjustment to obtain an appropriate degree of overlapping of the first and second capturing ranges, and selects the camera icon 896.

The relative position between the first image capturing range 891 and the second image capturing range 892, as well as the degree of overlapping of the first and second capturing ranges (overlapping range), are thereby determined, and the initial value of the image capturing start condition (trigger interval) is calculated.

If the user selects the redo icon 897, the already determined image capturing start condition (trigger interval) is reset. Accordingly, in the case where the user changes the initialization value, in the guidance screen 806 shown in Fig. 16, the user needs to again operate the slide bar 894 and select the camera icon 896 after he/she has selected the redo icon 897.

The basic processing for setting the image capturing start condition is the same as that of the flowchart shown in Fig. 14 described above, and thus a detailed description there of is not given here.

<I. Embodiment 3>

Next, as Embodiment 3, an example will be described in which the user determines the image capturing start condition while directly checking the field of view.

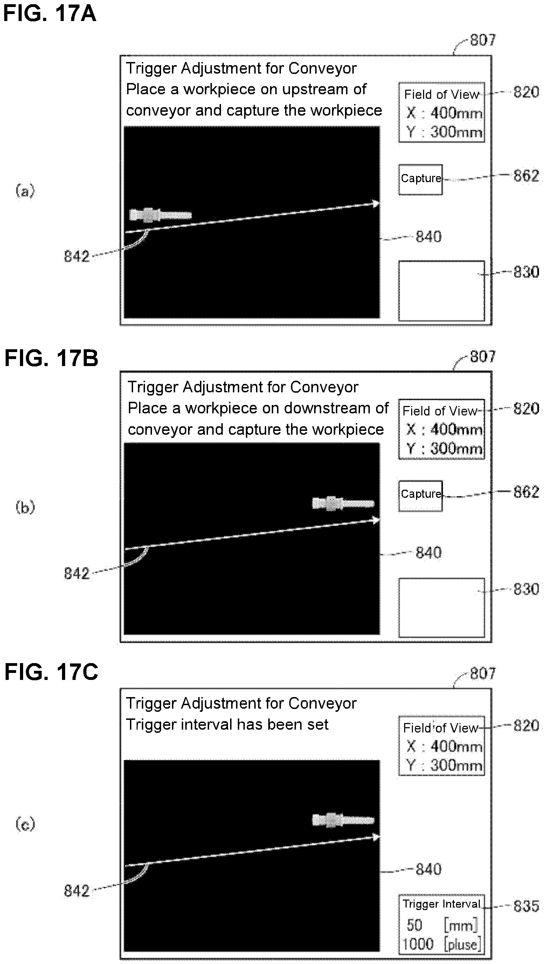

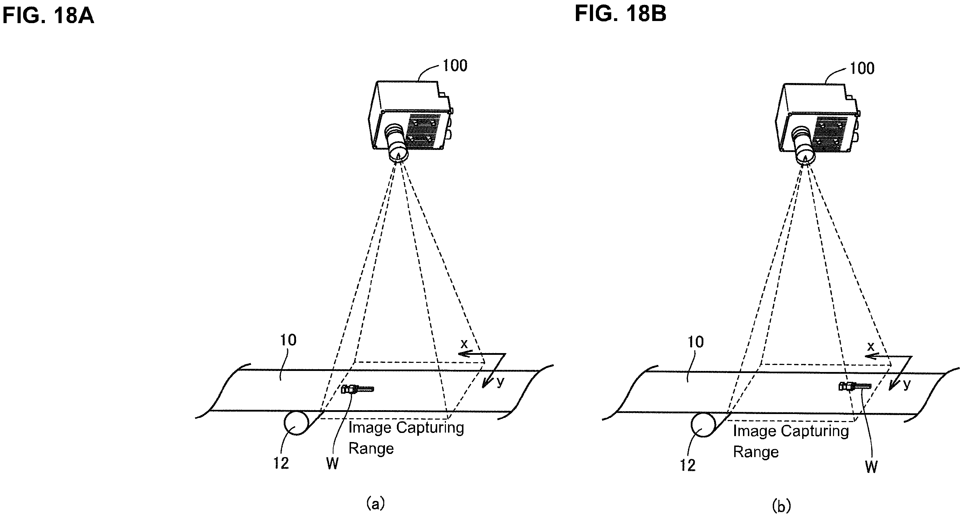

Fig. 17 shows diagrams showing examples of a user interface according to Embodiment 3 of the present invention. Fig. 18 shows diagrams illustrating arrangements of a workpiece W corresponding to Fig. 17.

When an instruction to start the user support function of the present embodiment has been issued, a guidance screen 807 including a menu for selecting measurement processing as shown in Fig. 17(a) is displayed on the monitor 67 (Fig. 5). In the guidance screen 807, an image obtained by image capturing with the image capturing unit 110 is displayed in the display region 840. It is preferable that the image displayed in the display region 840 is sequentially updated according to the timing of image capturing with the image capturing unit 110.

As shown in Fig. 18(a), the user places a workpiece W to be detected at a position that is within the image capturing range of the image capturing unit 110 and that is on the upstream side of the conveyor 10. For example, in a state in which the workpiece W is placed at a position as shown in Fig. 17(a), the user selects a capture button 862 of the guidance screen 807. Upon a first selection of the capture button 862, a first image capture timing is calculated. Specifically, a count value corresponding to the first image capture timing is obtained.

Subsequently, as shown in Fig. 18(b), the user drives the conveyor 10 so as to bring the workpiece W to a position that is within the image capturing range of the image capturing unit 110 and that is on the downstream side of the conveyor 10. Specifically, the user searches for a relative position of the workpiece W that corresponds to a second image capture timing while checking the content displayed in the display region 840 of the guidance screen 807. When a relative position to be used as the second image capture timing is set, then the user selects the capture button 862 of the guidance screen 807. In response thereto, a count value corresponding to the second image capture timing is obtained.

Then, the image capturing start condition (image capture cycle) is calculated from the count value corresponding to the first image capture timing and the count value corresponding to the second image capture timing. The calculated image capturing start condition is displayed in the image capturing start condition display portion 835 of the guidance screen 807.

Typically, the user properly positions the workpiece such that the same workpiece W is included in the image capturing range of the image capturing unit 110 at both the first and second image capture timings.

Incidentally, even after the image capturing start condition as shown in Fig. 17(c) has been automatically determined, the user can finely adjust the values of the image capturing start condition.

The basic processing for setting the image capturing start condition is the same as that of the flowchart shown in Fig. 14 described above, and thus a detailed description there of is not given here.

According to Embodiment 3, the user can adjust image capture timings while viewing the actual image obtained by image capturing, and therefore he/she can determine the image capturing start condition more intuitively.

<J. Calculation of Allowable Speed>

After the image capturing start condition has been determined according to any of the methods of Embodiments 1 to 3, an allowable conveying speed under the determined image capturing start condition can be determined. A method of determining such an allowable conveying speed will be described.

As described above, the image capturing start condition is specified as the trigger interval defined in terms of the distance of movement of the conveyor 10 (count value). Accordingly, the higher the speed of movement of the conveyor 10, the shorter the time interval between an instance of image capturing and the next instance of image capturing becomes. It is therefore necessary to set the time interval between instances of image capturing to be longer than the time required for the image capturing operation by the vision sensor 100 and the measurement processing on the captured image. An upper limit value of the conveying speed of the conveyor 10 can be calculated in advance by the following procedure.

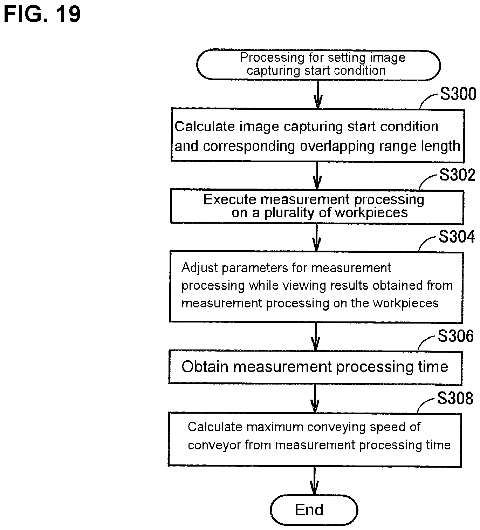

Fig. 19 is a flowchart illustrating a procedure of determining an upper limit value of the conveying speed in the conveyor tracking system that uses the vision sensor 100 according to an embodiment of the present invention.

As shown in Fig. 19, first, it is assumed that the image capturing start condition and the corresponding overlapping range length L [pixel] have been calculated by any of the above methods (step S300).

Next, the user executes a test measurement. More specifically, the user places a plurality of workpieces W on the conveyor 10 and executes measurement processing on the workpieces W (step S302). At the same time, the user adjusts the parameters for measurement processing while viewing the results obtained by the measurement processing on the workpieces W (step S304). The adjustment can include adjustment of the model range, the number of divisions of rotation angle, and the like. The parameters are adjusted so as to minimize the time required for measurement processing.

Upon completion of the adjustment, a measurement processing time T [sec] that is the time required for measurement processing is obtained (step S306). The upper limit value of the conveying speed of the conveyor 10 (maximum conveying speed V [mm/sec]) is calculated from the measurement processing time T (step S308).

More specifically, as with the trigger interval calculation method described above, the maximum conveying speed V is calculated by using either of the following equations depending on which of the amount of movement dX of the workpiece W in the X direction and the amount of movement dY of the workpiece W in the Y direction is greater or smaller.

(1) In the case of dX > dY

$$\text{Maximum conveying speed } V = \{A \cdot (WD-L) + B \cdot HT\}/T \text{ [mm/sec]}$$

(2) In the case of dX $\leq$ dY

$$\text{Maximum conveying speed } V = \{D \cdot WD + E \cdot (HT-L)\}/T \text{ [mm/sec]}$$

As described above, the vision sensor 100 of the present embodiment has a function of determining an allowable conveying speed of the conveying apparatus (conveyor 10) from the relationship between the image capturing start condition (trigger interval) and the measurement processing time (T [sec]) in the image processing apparatus.

By incorporating such a function, the productivity of the entire production equipment including the vision sensor and the conveying apparatus can be evaluated easily.

<K. Processing Procedure during Operation>

A processing procedure during operation in accordance with the image capturing start condition determined by the procedure as described above will be described next.

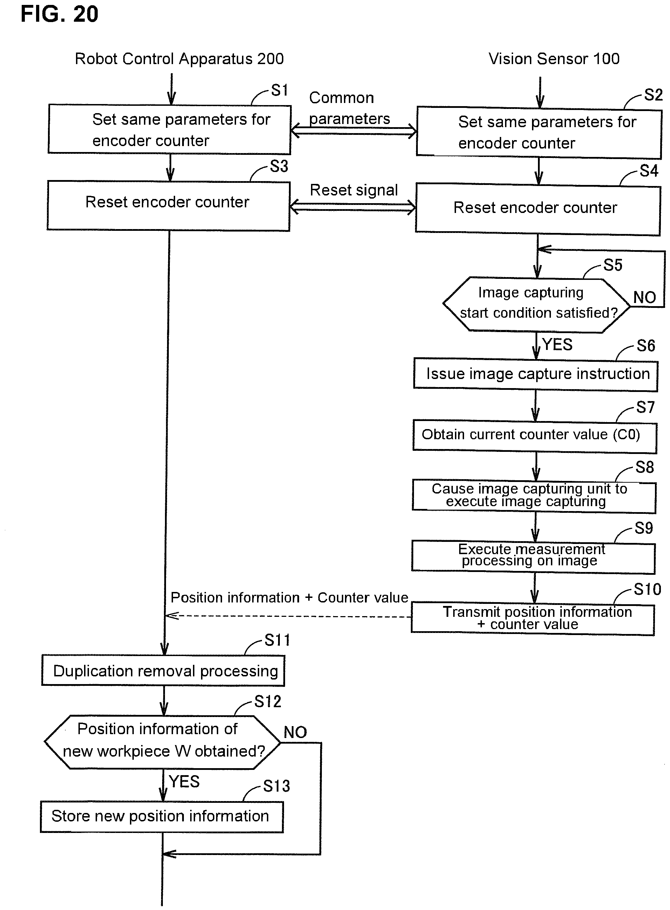

Fig. 20 is a sequence diagram illustrating a control operation in the conveyor tracking system that uses the vision sensor 100 according to an embodiment of the present invention.

As shown in Fig. 20, first, the same parameters (counter maximum value, counter minimum value, incremental value per pulse and so on) are set for both the vision sensor 100 and the robot control apparatus 200 (steps S1 and S2). Then, in both the vision sensor 100 and the robot control apparatus 200, their respective encoder counters are reset (counter reset) (steps S3 and S4). Setting common parameters in the encoder counters and resetting the encoder counters enables synchronization of the count operations of pulses included in the pulse signal from the encoder 14 between the vision sensor 100 and the robot control apparatus 200.

Subsequently, the image processing unit 120 of the vision sensor 100 determines whether or not the image capturing start condition has been satisfied (step S5). Specifically, the image processing unit 120 of the vision sensor 100 determines whether or not the number of pulses of the pulse signal from the encoder 14 has increased from the value obtained from the previous instance of image capturing by the trigger interval or more.

If it is determined that the image capturing start condition has been satisfied, the image processing unit 120 of the vision sensor 100 issues an image capture instruction to the vision sensor 100 (step S6). The image processing unit 120 of the vision sensor 100 obtains a counter value (C0) at the time of image capturing with reference to the encoder counter 132 in synchronization with the issuance of the image capture instruction (step S7).

Subsequently, the image processing unit 120 of the vision sensor 100 causes the image capturing unit 110 to execute image capturing (step S8). The image obtained by image capturing with the image capturing unit 110 is transmitted to the image processing unit 120. The image processing unit 120 executes measurement processing on the image from the image capturing unit 110 (step S9). Furthermore, the image processing unit 120 transmits to the robot control apparatus 200 the measurement result (position information (X, Y, 8) of each workpiece) obtained by the measurement processing in step S9 together with the counter value C0 obtained in step S7 (step S10).

The robot control apparatus 200 executes duplication removal processing based on the measurement result from the image processing unit 120 (step S11).

The arithmetic processing unit 210 of the robot control apparatus 200 determines whether or not the position information of a new workpiece W has been obtained (step S12). If it is determined that the position information of a new workpiece W has been obtained (YES in step S12), the new position information is stored in the memory (step S13). Then, the procedure returns.

<L. Processing in Robot Control Apparatus>

Processing in the robot control apparatus 200 will be described next.

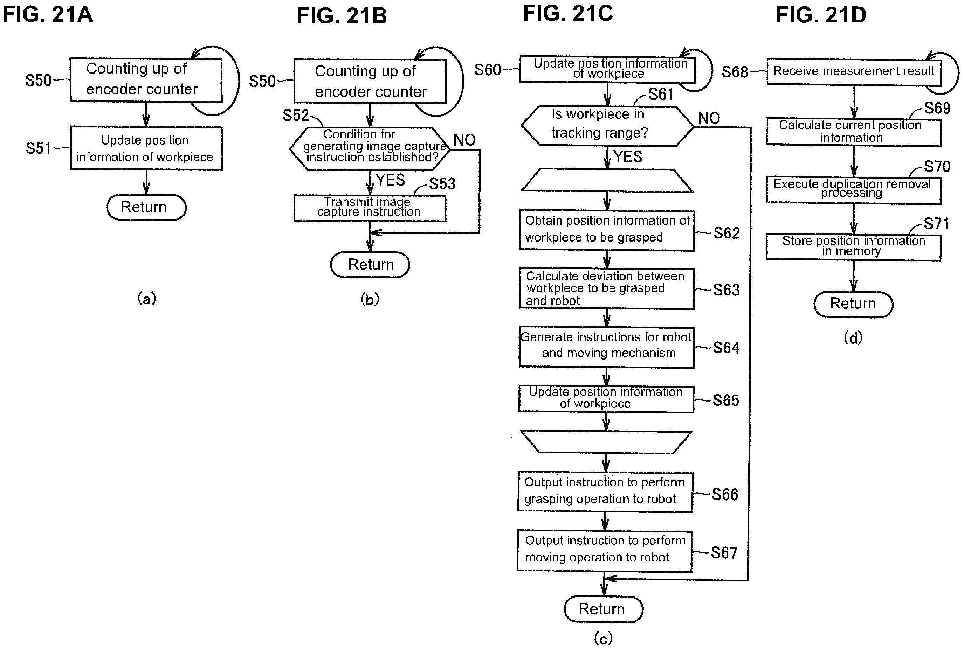

Fig. 21 shows flowcharts illustrating processing in the robot control apparatus 200 of an embodiment of the present invention. Figs. 21(a) to 21(d) show primary processing executed in the robot control apparatus 200, but the processing in the robot control apparatus 200 is not limited to that shown in Fig. 21.

Fig. 21 (a) shows processing performed when the encoder 14 generates a pulse signal. More specifically, the processing of Fig. 21 (a) is started by an event in which the encoder 14 generates a pulse signal and the encoder counter 232 counts up (step S50). When the encoder counter 232 has counted up, the position information of each workpiece stored in the memory of the robot control apparatus 200 is updated (step S51). The method of updating the position information is as follows.

As shown in Fig. 2, workpieces are conveyed in the X direction and the right end of the tracking range of the robot 300 is set as the origin of the X direction. Here, it is assumed that the amount of movement of the conveyor (movement vector) per pulse of the encoder 14 is (dX, dY). If n pulses are input, the position information of a workpiece W whose position information is (X0, Y0, 80) before update will be (X0-dX×n, Y0-dY×n, 80) after update. In other words, the value obtained by multiplying a unit amount of movement on the conveyor per pulse by the number of pulses is used as the amount of movement of the workpiece W (dX×n, dY×n). And, if it is assumed that the workpiece W is moving in the direction toward the origin, then, the position information of the workpiece is updated by an amount corresponding to the amount of movement (movement vector).

Then, the robot control apparatus 200 waits for the encoder counter 232 to start counting up. Fig. 21 (b) also shows processing performed when the encoder 14 generates a pulse signal. More specifically, the processing of Fig. 21 (b) is started by an event in which the encoder 14 generates a pulse signal and the encoder counter 232 counts up (step S50). When the encoder counter 232 has counted up, it is determined whether or not a condition for generating an image capture instruction has been established. In the above example, it is determined whether or not the number of pulses of the pulse signal from the encoder 14 has increased from the value obtained from the previous instance of image capturing by a predetermined value or more. If it is determined that a condition for generating an image capture instruction has been established (YES in step S50), an image capture instruction is transmitted from the robot control apparatus 200 to the vision sensor 100.

Fig. 21 (c) illustrates a grasping operation performed by the robot 300. The flowchart of Fig. 21(c) is started by an event in which the position information of workpieces is updated (step S60). More specifically, when the position information of workpieces has been updated, it is determined whether or not there is a workpiece W in the tracking range of the robot 300 (step S61). If it is determined that there is a workpiece W in the tracking range of the robot 300 (YES in step S61), control of a grasping operation of the workpiece W by the robot 300 starts. Specifically, the position information of the workpiece to be grasped that is present in the tracking range is obtained (step S62), a deviation between the workpiece to be grasped and the robot 300 is calculated (step S63), instructions for the robot 300 and the moving mechanism 400 are generated based on the deviation calculated in step S63 (step S64), and the position information of the workpiece W is updated (step S65). This sequential processing is repeated. Then, when the robot 300 has moved to the position at which it can grasp the workpiece W, the robot control apparatus 200 outputs a grasping operation instruction to the robot 300 (step S66). Subsequently, a movement operation instruction for causing the robot 300 grasping the workpiece W to move the workpiece W to the target position is output to the robot 300 (step S67). The procedure then returns.

The flowchart of Fig. 21 (d) is started by an event in which another position information is received. More specifically, the current position information is calculated (step S69), and duplication removal processing is executed (step S70). After that, the position information is stored in the memory (step S71).

The method of calculating the current position information of the workpiece W shown in step S69 will be described. A difference between the count value at the time of image capturing and the count value at each time point is calculated, and the calculated difference is multiplied by a unit amount of movement of the workpiece W on the conveyor per pulse. The obtained value is used as the amount of correction. The obtained amount of correction is applied to the measurement result (the position information of the workpiece received from the vision sensor 100), and thereby the current position information is calculated.

The conveyor tracking of the present embodiment is implemented by the processing procedure described above.

<M. Other Functions of Support Apparatus>

As described above, the support apparatus 600 is capable of data communication with the vision sensor 100 and the robot control apparatus 200, and thus can collect various types of data. Accordingly, the support apparatus 600 of the present embodiment may be configured to collect images subjected to the measurement processing from the vision sensor 100 when adjustment is performed.

When images subjected to the measurement processing are collected from the vision sensor 100, each image is associated with the corresponding count value and measurement values (coordinates and angles and the like) and then stored. The information is transmitted from the vision sensor 100 to the support apparatus 600 via the network NW, and stored in the hard disk 64 or the like of the support apparatus 600.

In particular, because each image and the measurement result are associated using the corresponding count value as a key and stored, a necessary image and measurement result can be easily searched for by using a count value corresponding to the desired timing.

The following function can be provided by preparing a database containing such images and measurement results. Specifically, by recording the robot operation (positioning and tracking processing) in association with count values in the robot 300, image processing corresponding to the robot operation can be associated. With this configuration, for example, in the case where the grasping operation fails, the image of the workpiece to be grasped and the measurement result can be recreated in the support apparatus 600 to find out the cause of failure. Therefore, the cause of failure can be analyzed more easily.

<N. Advantages>

According to the present embodiment, it is possible to reduce the number of adjustment steps in an image processing system such as a conveyor tracking system. Specifically, the user can intuitively set the overlapping range (trigger interval) while viewing the information output from the vision sensor 100 (for example, the captured image, the circumscribed rectangle of a model to be registered and the like). Also, the fields of application of the vision sensor 100 of the present embodiment described above are not limited to a specific field such as the field of conveyor tracking and can be broadened to measurement processing originally equipped in generally-used image processing apparatuses. That is, in the case of using measurement processing that registers a model in advance, an optimal trigger interval (image capturing start condition) can be set graphically.

The embodiments disclosed in this application are to be considered in all respects as illustrative and not limiting. The scope of the present invention is indicated by the appended claims rather than by the foregoing description, and all changes which come within the meaning and range of equivalency of the claims are intended to be embraced therein.

INDEX TO THE REFERENCE NUMERALS

| | |
|---|---|
| 10 | Conveyor |
| 12 | Driving Roller |
| 14 | Encoder |
| 30 | Dispenser |

| | |
|---|---|
| 61, 122 | CPU |
| 61 a | User Support Logic |
| 63 | RAM |
| 64 | Hard Disk |
| 65 | Keyboard |
| 66 | Mouse |
| 67 | Monitor |
| 68 | Drive |
| 69 | CD-ROM |
| 100 | Vision Sensor |
| 110 | Image Capturing Unit |
| 120 | Image Processing Unit |
| 124, 220 | Memory |
| 126 | Image Capturing Control Unit |
| 128, 228 | Communication Interface |
| 130, 230 | Input/Output Interface |
| 132, 232 | Encoder Counter |
| 134 | Bus |
| 200 | Robot Control Apparatus |
| 210 | Arithmetic Processing Unit |
| 240 | Picking Control Unit |
| 250 | Movement Control Unit |
| 300 | Robot |
| 400 | Moving Mechanism |
| 500 | Operation Display Apparatus |
| 600 | Support Apparatus |
| 2100 | Teaching Pendant |
| NW | Network |
| S | Calibration Sheet |

W        Workpiece

**Claims**

1. A user support apparatus for an image processing system, the image processing system comprising:

   an image capturing unit disposed so as to capture a workpiece conveyed on a conveying apparatus; and
   an image processing apparatus connected to the image capturing unit, and

   the user support apparatus comprising:

   a display means for displaying an image obtained by image capturing with the image capturing unit;
   an overlapping range determining means for determining an overlapping range between image capturing ranges in the images displayed on the display means; and
   an image capturing start condition determining means for determining an image capturing start condition for the image capturing unit that is defined in terms of an amount of movement of the conveying apparatus, the image capturing start condition being determined based on a size of the determined overlapping range, using a relationship between an image capturing range of the image capturing unit and a property of the conveying apparatus.

2. The user support apparatus according to claim 1, further comprising a changing means for changing the determined image capturing start condition in response to a user operation.

3. The user support apparatus according to claim 1 or 2, further comprising a measurement means for performing measurement processing on the image obtained by image capturing with the image capturing unit,
   wherein the overlapping range determining means determines the overlapping range from a range detected by the measurement processing.

4. The user support apparatus according to claim 1 or 2,
   wherein the overlapping range determining means determines the overlapping range in response to a designation of a region to be detected in the image displayed on the display means.

5. The user support apparatus according to claim 1 or 2,
   wherein the overlapping range determining means determines the overlapping range so that it can include at least a region indicating a workpiece to be detected.

6. The user support apparatus according to claim 5,
   wherein the overlapping range determining means determines the overlapping range such that the overlapping range is longer than a diagonal line of the region indicating a workpiece to be detected.

7. The user support apparatus according to claim 1 or 2,
   wherein the overlapping range determining means comprises:

   a means for simultaneously displaying a range corresponding to a workpiece conveyed on the conveying apparatus and a plurality of image capturing ranges captured consecutively; and
   a means for determining the overlapping range in response to a user operation on the displayed plurality of image capturing ranges.

8. The user support apparatus according to any one of claims 1 or 7, further comprising a means for determining an allowable conveying speed of the conveying apparatus, based on a relationship between the image capturing start condition and a measurement processing time in the image processing apparatus.

9. The user support apparatus according to any one of claims 1 or 8, further comprising a means for determining an allowable conveying speed of the conveying apparatus from a relationship between the image capturing start condition and a measurement processing time in the image processing apparatus.

10. A program that can be executed by a computer and thereby cause the computer to function as a user support apparatus for an image processing system,
the image processing system comprising:

an image capturing unit disposed so as to capture a workpiece conveyed on a conveying apparatus; and
an image processing apparatus connected to the image capturing unit, and

the program causing the computer to function as:

a display means for displaying an image obtained by image capturing with the image capturing unit;
an overlapping range determining means for determining an overlapping range between image capturing ranges in the images displayed on the display means; and
an image capturing start condition determining means for determining an image capturing start condition for the image capturing unit that is defined in terms of an amount of movement of the conveying apparatus, the image capturing start condition being determined based on a size of the determined overlapping range, using a relationship between an image capturing range of the image capturing unit and a property of the conveying apparatus.

11. An image processing apparatus that can be connected to an image capturing unit that is disposed so as to capture a workpiece conveyed on a conveying apparatus, the image processing apparatus comprising:

a display means for displaying an image obtained by image capturing with the image capturing unit;
an overlapping range determining means for determining an overlapping range between image capturing ranges in the image displayed on the display means; and
an image capturing start condition determining means for determining an image capturing start condition for the image capturing unit that is defined in terms of an amount of movement of the conveying apparatus, the image capturing start condition being determined based on a size of the determined overlapping range, using a relationship between an image capturing range of the image capturing unit and a property of the conveying apparatus.

# FIG. 1

EP 2 500 147 A2

# FIG. 2

NW

Image Capture Instruction

Position Information (X, Y, θ) + Count Value at the Time of Image Capturing (C)

Image Capture Instruction

200

Robot Control Apparatus

100

Pulse Signal

Move

300

400

X

Y

x

y

W

Image Capturing Range

Tracking Range (Operating Range)

12

14

10

**FIG. 3**

EP 2 500 147 A2

**FIG. 4A**

(a)

W

WD

10

HT

Conveyance
Direction

Previous Image Capturing Range

**FIG. 4B**

(b)

W

10

Conveyance
Direction

Current Image
Capturing Range

Previous Image
Capturing Range

Overlapping
Range L

**FIG. 5**

600

69

67

65 Keyboard

66 Mouse

68 CD-ROM Drive

61 CPU

User Support Logic

61a

62 ROM

63 RAM

64 HDD

## FIG. 6

Robot Coordinats

NW

Image Coordinate System

x [pix]

y [pix]

Image

100

Robot Control Apparatus

200

Conveyor Position

Robot Coordinates

300

400

Robot Coordinate System

X[mm]

Y[mm]

W

x

y

W

Image Capturing Range

12

14

Tracking Range (Operating Range)

10

EP 2 500 147 A2

# FIG. 7

124c

| Parameter | Type | Explanation |
|---|---|---|
| xi1, yi1<br>xi2, yi2<br>xi3, yi3<br>xi4, yi4 | Real Number<br>[pixel] | Image coordinates of four points of target pattern<br> |
| E1<br>E2<br>E3 | Integer<br>[pulses] | Encoder count value<br>E1: At the start of calibration<br>E2: At the time when conveyor has been moved to robot's operating range (upstream)<br>E3: At the time when conveyor has been moved to robot's operating range (downstream) |
| X1, Y1<br>X2, Y2<br>X3, Y3<br>X4, Y4 | Real Number<br>[mm] | Robot coordinates of four points of target pattern at the time when conveyor has been moved to robot's operating range (upstream) |
| X5, Y5 | Real Number<br>[mm] | Robot coordinates of mark 1 of target pattern at the time when conveyor has been moved to robot's operating range (downstream) |
| dX<br>dY | Real Number<br>[mm/pulse] | Distances by which conveyor is moved in X direction and Y direction per encoder pulse<br>$dX = (X5-X1)/(E3-E2)$<br>$dY = (Y5-Y1)/(E3-E2)$ |
| A, B, C,<br>D, E, F | Real Number | Parameters for transformation from image coordinate system to robot coordinate system<br>$X = A \cdot xi + B \cdot yi + C$<br>$Y = D \cdot xi + E \cdot yi + F$ |

FIG. 8

Obtain image coordinates

NW

Robot
Control
Apparatus

200

100

300

400

S

x

y

X

Y

Image Capturing Range

Tracking Range
(Operating Range)

12

14

10

EP 2 500 147 A2

# FIG. 9

Robot Coordinates

NW

200

Robot Control Apparatus

100

Robot Coordinates

Conveyor Position

300

400

Image Capturing Range

12

Conveyor Position

14

S

Tracking Range (Operating Range)

10

EP 2 500 147 A2

**FIG. 10**

Robot Coordinates

Robot Coordinates

Robot Control Apparatus

200

NW

Conveyor Position

100

300

400

10

X Y

S

Tracking Range (Operating Range)

14

Image Capturing Range

x y

12

## FIG. 11A

(a)

Select Algorithm

811 — ☐ 0.Search

812 — 1.Binarization

810

800

Field of View — 820
X : 400mm
Y : 300mm

830

## FIG. 11B

(b)

850

Register model
Define a range to be registered as a model

844

845

801

Field of View — 820
X : 400mm
Y : 300mm

840

Model — 830
(100, 100)
-(200, 200)

## FIG. 11C

851

(c)

Trigger Adjustment for Conveyor
Overlapping range has been set

842

844

840

Overlapping
Range   41.26  mm

860

802

Field of View — 820
X : 400mm
Y : 300mm

Trigger Interval — 835
50   [mm]
1000 [pluse]

## FIG. 12A

(a)

800

Select Algorithm

811 — 0. Search

812 — 1. Binarization

810

Field of View — 820
X : 400mm
Y : 300mm

832

## FIG. 12B

(b)

846    840    803

Binarization Level
Adjustment

846

846

Field of View — 820
X : 400mm
Y : 300mm

Binarization
Level    100    870

Maximum — 832
Dimension
200   [pix]
50    [mm]

## FIG. 12C

(c)

851    804

Trigger Adjustment for Conveyor
Adjust overlapping range

842

846

848

Field of View — 820
X : 400mm
Y : 300mm

Trigger Interval — 835
50    [mm]
1000  [pluse]

Overlapping
Range    41.26   mm
860

## FIG. 13

```
        ┌─────────────────────────────┐
        │  Processing for setting image │
        │   capturing start condition   │
        └─────────────────────────────┘
                      │
                      ▼                    ┌────S100
              ╱─────────────────╲          │
             ╱ Instruction to start user╲  NO
             ╲  support function received?╱──┘
              ╲─────────────────╱
                      │ YES              ┌───S102
                      ▼
        ┌─────────────────────────────┐
        │ Display guidance screen including menu │
        │  for selecting measurement processing  │
        └─────────────────────────────┘
                      │                  ┌───S104
                      ▼
          ╱─────────────────────╲
Search   ╱ "Search processing" or ╲  Binarization processing
processing╲  "binarization processing"╱
          ╲     selected?         ╱
           ╲──────────────────╱
      │                              │
      ▼  ┌──S110                     ▼  ┌──S120
┌──────────────────────┐     ┌──────────────────────┐
│ Display image obtained by │  │ Display image obtained by image │
│    image capturing        │  │ capturing by image capturing unit │
└──────────────────────┘     └──────────────────────┘
      │  ┌──S112                     │  ┌──S122
      ▼                              ▼
┌──────────────────────┐     ┌──────────────────────┐
│Receive designation of model region│ │Receive designation of binarization level│
└──────────────────────┘     └──────────────────────┘
      │  ┌──S114                     │  ┌──S124
      ▼                              ▼
┌──────────────────────┐     ┌──────────────────────┐
│  Obtain size of designated │  │Execute binarization processing according│
│     model region          │  │ to designated binarization level        │
└──────────────────────┘     └──────────────────────┘
      │  ┌──S116                     │  ┌──S126
      ▼                              ▼
┌──────────────────────┐     ┌──────────────────────┐
│ Calculate image capturing start │ │Determine circumscribed rectangle│
│condition from size of model region│ │region surrounding each workpiece│
└──────────────────────┘     │identified as detection target   │
      │  ┌──S118             └──────────────────────┘
      ▼                              │  ┌──S128
┌──────────────────────┐            ▼
│Display calculated image capturing start│ ┌──────────────────────┐
│condition and conveyor moving direction │ │Determine maximum workpiece size│
│on displayed image in overlaid manner   │ └──────────────────────┘
└──────────────────────┘            │  ┌──S130
      │                              ▼
      ▼◄──────────────┐     ┌──────────────────────┐
      │◄──────────┐   │     │Calculate image capturing start condition│
      ▼  ┌──S140   │   │     │from determined maximum workpiece size   │
┌──────────────┐  │   │     └──────────────────────┘
│ Receive change in │  │   │            │  ┌──S132
│ overlapping range length│ │   │        ▼
└──────────────┘  │   │     ┌──────────────────────┐
      │  ┌──S142   │   │     │Display calculated image capturing start│
      ▼            │   │     │condition and conveyor moving direction │
┌──────────────┐  │   │     │on displayed image in overlaid manner   │
│Update image capturing start condition│ └──────────────────────┘
└──────────────┘  │   └────────────┘
      │  ┌──S144
      ▼
  ╱─────────────╲   NO
 ╱ Instruction to end user╲──┘
 ╲ support function received?╱
  ╲─────────────╱
      │ YES
      ▼
   ┌──────┐
   │  End │
   └──────┘
```

FIG. 14

## FIG. 15

```
      ┌─────────────────────────────┐
     (  Processing for setting image )
     (  capturing start condition    )
      └─────────────────────────────┘
                    │
                    ▼                    S200
          ╱───────────────────╲
         ╱  Instruction to start ╲  NO
         ╲  user support function ╱ ──────┐
          ╲    received?        ╱         │
           ╲─────────────────╱           │
                    │ YES                 │
                    ▼         S202        │
          ┌─────────────────────┐        │
          │ Display guidance screen │    │
          └─────────────────────┘        │
                    │                     │
                    ▼                S204 │
          ╱───────────────────╲          │
         ╱    Workpiece Size     ╲  NO    │
         ╲    input from user?    ╱ ──────┤
          ╲─────────────────────╱        │
                    │ YES                 │
                    ▼              S206    │
    ┌─────────────────────────────────┐  │
    │ Calculate initial value of image │  │
    │ capturing start condition based  │  │
    │ on image size, input workpiece   │  │
    │ size, etc.                       │  │
    └─────────────────────────────────┘  │
                    │              S208    │
    ┌─────────────────────────────────┐  │
    │ Display circular mark indicating │  │
    │ size of workpiece to be detected │  │
    │ and first and second image       │  │
    │ capturing ranges in virtual      │  │
    │ display region                   │  │
    └─────────────────────────────────┘  │
                    │◄──────────────┐     │
                    ▼         S210   │     │
          ╱───────────────────╲     │     │
         ╱   Slide bar operated? ╲ NO│     │
         ╲─────────────────────╱ ────┤     │
                    │ YES             │     │
                    ▼         S212    │     │
    ┌─────────────────────────────┐  │     │
    │ Update already determined   │  │     │
    │ image capturing start       │  │     │
    │ condition                   │  │     │
    └─────────────────────────────┘  │     │
                    │         S214    │     │
    ┌─────────────────────────────┐  │     │
    │ Update display in virtual   │  │     │
    │ display region              │  │     │
    └─────────────────────────────┘  │     │
                    │◄───────────────┘     │
                    ▼         S216          │
          ╱───────────────────╲            │
     NO  ╱ Instruction to end user ╲       │
    ─────╲ support function received? ╱ ───┘
          ╲─────────────────────╱
                    │ YES
                    ▼
               ┌─────────┐
              (   End    )
               └─────────┘
```

## FIG. 16A

(a)

882
881
806

☑ Trigger Adjustment for Conveyor

Trigger
Interval | 0 | ▲▼ | Millimeters ▼

Workpiece
Size | 50 | ▲▼ | Millimeters ▼

896
897

Set an appropriate position and press
camera button

890

893

891

◁ ▷

894

## FIG. 16B

(b)

882
881
806

☑ Trigger Adjustment for Conveyor

Trigger
Interval | 55 | ▲▼ | ▼

Workpiece
Size | 50 | ▲▼ | ▼

896
897

Set an appropriate position and press
camera button

891

893

→ Slide

892

◁ ▷

894  895

41

## FIG. 17A

807

Trigger Adjustment for Conveyor
Place a workpiece on upstream of
conveyor and capture the workpiece

Field of View — 820
X : 400mm
Y : 300mm

Capture — 862

840

830

842

(a)

## FIG. 17B

807

Trigger Adjustment for Conveyor
Place a workpiece on downstream of
conveyor and capture the workpiece

Field of View — 820
X : 400mm
Y : 300mm

Capture — 862

840

830

842

(b)

## FIG. 17C

807

Trigger Adjustment for Conveyor
Trigger interval has been set

Field of View — 820
X : 400mm
Y : 300mm

840

Trigger Interval — 835
50    [mm]
1000  [pluse]

842

(c)

**FIG. 18A**

**FIG. 18B**

(a)

(b)

Image Capturing Range

100

10

12

W

x

y

## FIG. 19

```
       Processing for setting image
        capturing start condition
                    │
                    ▼                    ╱─S300
┌─────────────────────────────────────────┐
│ Calculate image capturing start condition │
│ and corresponding overlapping range length│
└─────────────────────────────────────────┘
                    │                    ╱─S302
                    ▼
┌─────────────────────────────────────────┐
│       Execute measurement processing      │
│          on a plurality of workpieces     │
└─────────────────────────────────────────┘
                    │                    ╱─S304
                    ▼
┌─────────────────────────────────────────┐
│ Adjust parameters for measurement         │
│ processing while viewing results obtained from│
│ measurement processing on the workpieces  │
└─────────────────────────────────────────┘
                    │                    ╱─S306
                    ▼
┌─────────────────────────────────────────┐
│      Obtain measurement processing time   │
└─────────────────────────────────────────┘
                    │                    ╱─S308
                    ▼
┌─────────────────────────────────────────┐
│ Calculate maximum conveying speed of      │
│ conveyor from measurement processing time │
└─────────────────────────────────────────┘
                    │
                    ▼
                 ( End )
```

# FIG. 20

Robot Control Apparatus 200          Vision Sensor 100

S1
Set same parameters for encoder counter

Common parameters

S2
Set same parameters for encoder counter

S3
Reset encoder counter

Reset signal

S4
Reset encoder counter

S5
Image capturing start condition satisfied? — NO

YES

S6
Issue image capture instruction

S7
Obtain current counter value (C0)

S8
Cause image capturing unit to execute image capturing

S9
Execute measurement processing on image

S10
Transmit position information + counter value

Position information + Counter value

S11
Duplication removal processing

S12
Position information of new workpiece W obtained? — NO

YES

S13
Store new position information

## FIG. 21A

S50 — Counting up of encoder counter

S51 — Update position information of workpiece

Return

(a)

## FIG. 21B

S50 — Counting up of encoder counter

S52 — Condition for generating image capture instruction established? → NO

YES ⌐S53

Transmit image capture instruction

Return

(b)

## FIG. 21C

S60 — Update position information of workpiece

S61 — Is workpiece in tracking range? → NO

YES

Obtain position information of workpiece to be grasped — S62

Calculate deviation between workpiece to be grasped and robot — S63

Generate instructions for robot and moving mechanism — S64

Update position information of workpiece — S65

Output instruction to perform grasping operation to robot — S66

Output instruction to perform moving operation to robot — S67

Return

(c)

## FIG. 21D

S68 — Receive measurement result

Calculate current position information — S69

Execute duplication removal processing — S70

Store position information in memory — S71

Return

(d)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2002113679 A